# EUROPEAN PATENT APPLICATION

(11) **EP 1 552 917 A1**
(43) Date of publication of application: **13.07.2005**
(21) Application number: 03792670.6
(22) Date of filing: 12.08.2003
(51) Int. Cl.: B29D 30/48, B21F 37/00

(54) **METHOD AND APPARATUS FOR PRODUCING TWISTED BEAD WIRE**

(30) Priority: 20.08.2002 JP 2002280054; 20.08.2002 JP 2002280055; 25.11.2002 JP 2002382651
(71) Applicant: Metal One Corporation, Tokyo 1050014 (JP)
(72) Inventor: NIWA, Tomomichi, Komaki-shi, Aichi 485-0029 (JP)
(74) Representative: Giles, Ashley Simon
(86) International application number: PCT/JP2003/010241
(87) International publication number: WO 2004/018187

(57) **Abstract**

A method for manufacturing a stranded bead wire comprises: rotating an annular core wire in the circumferential direction thereof, while repeating a pseudo linear reciprocating motion of a reel around which a steel wire is wound to have an outside diameter smaller than that of the annular core wire, in which motion the reel is displaced approximately in a radial direction of the annular core wire in a way that it is relatively displaced in an approach direction on one side of a plane crossing the annular core wire, then passed through inside thereof, and displaced in a direction of distance increase on the other side of the plane, whereby the steel wire is tightly wound onto the annular core wire in a spiral pattern. A stranded bead wire manufacturing apparatus comprises: a core wire rotating means for rotating an annular core wire; a free rotational reel around which a steel wire is wound to have an outside diameter smaller than that of the annular core wire; and a reciprocable displacement means for repeating the pseudo linear reciprocating motion of the free rotational reel relative to the annular core wire, wherein, while the annular core wire is rotated, the free rotational reel repeats the pseudo linear reciprocating motion, whereby the steel wire is tightly wound onto the annular core wire in a spiral pattern. The aforementioned method and apparatus of manufacturing a stranded bead wire allow the steel wire to be tightly wound along and onto the annular core wire with no twisting stress exerted on the steel wire, thereby providing a desired stranded bead wire appropriately and easily.

## Description

### Field of the Invention

This invention relates to a method and an apparatus of manufacturing a bead wire which is embedded into a bead portion of a tire used for cars, motorcycles, aircrafts or the like to improve a force for the tire to tightly joint a wheel.

### Background Art

A bead wire is disposed in a bead portion of a tire fitted to a certain bead seat portion of a wheel, which is designed to tight-fit the wheel in the circumferential direction to improve the force for the tire to tightly joint the wheel. This bead wire has a function of preventing deformation of the tire, for example, when the car is cornering, so that driving stability improves. In recent years, vehicles tend to weigh more due to size increase and run at a higher speed resulted from an improvement of road conditions including freeway. Thus, the bead wire is required to stably provide increased force for the tire to tightly joint the wheel.

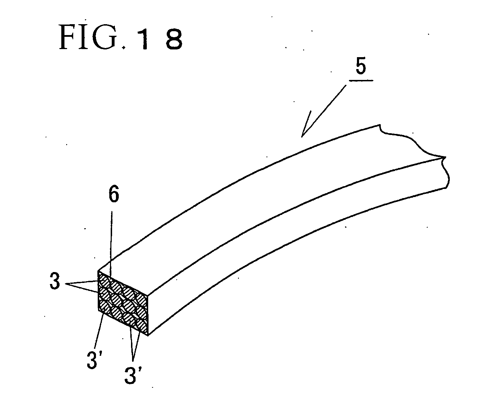

A generally well-known bead wire 5, as shown in FIG. 18, is made up of plural steel wires 3 which are close-wound, tight and even in the axial and radial directions of the tire, respectively, and are formed integral with a reinforcement 6 of rubber, resin or the like into a core. Such bead wire is wrapped around the bead portion. The bead wire 5 forming a core includes the steel wires 3 whose circumferential length becomes smaller toward the center of the tire in the radial direction. Thus, a steel wire 3', disposed closest to the center of the tire in the radial direction, is subject to the largest tensile stress per unit length, which acts on the bead wire 5 in the circumferential direction while driving. This causes a problem with easy breakdown of this steel wire 3'. In order to solve the problem, some examples of the bead wire are proposed, in which a steel wire closer to the center of the tire in the radial direction has a larger diameter, and in which steel wires are wound up from the inside to the outside of the tire in the radial direction and formed in a spiral pattern (Patent Document 1: JP-A-H10-203123). However, in such constitutions, a greater tensile stress per unit length still acts on a steel wire disposed closer to the center of the tire in the radial direction. Therefore, a steel wire closest to the center is more likely to continue to be tensioned. This causes a difference in tensional states between steel wires, preventing improvement of driving stability.

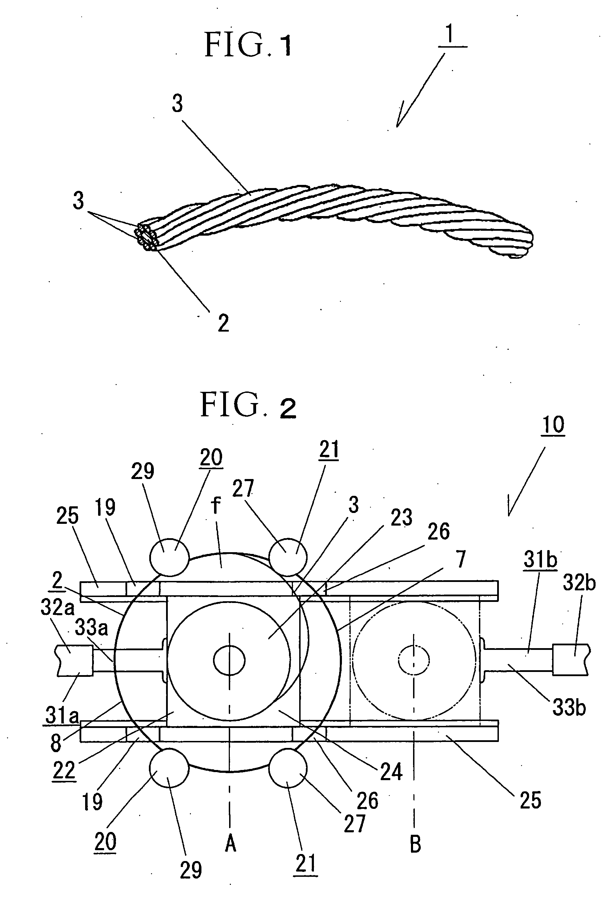

In contrast, another type of bead wire in the form of a strand is disclosed, in which a steel wire is wound onto an annular core wire (See FIG. 1). For this type of bead wires, a well-known one is made up of windings of a single or plural steel wires. This allows the windings to be subject to a nearly equal circumferential tensile stress per unit length. Therefore, it has a great advantage of avoiding a problem caused by the above core-forming type bead wire. In addition, compared to the core-forming type bead wire, such a stranded type wire can provide a higher strength and durability due to a friction force produced between the windings of the steel wires, provided that the same length of steel wire is used for forming each type of wire.

However, this stranded form, that is, a stranded bead wire, is generally manufactured by twisting the steel wire along its cross section and winding it onto the annular core wire such that one linear line in the outer face of the steel wire in the longitudinal direction keeps contact with the outer face of the annular core wire. Thus, winding the steel wire requires a large twisting force, which is equal to or greater than a twisting yield point of the steel wire and a large bending force, which is equal to or greater than a bending yield point of the steel wire. These twisting and bending forces remain as a residual stress in the steel wire, which acts as a repulsive force of the steel wire wound onto the annular core wire. This arises problems, causing the windings of the steel wire to separate from the annular core wire or to be broken in the manufacturing process. Thus, it is difficult to appropriately wind the steel wire onto the annular core wire. A means for manufacturing a stranded wire, which can provide desired performance, has not yet been established.

This invention is intended to solve the above problems caused in manufacturing the stranded bead wires. The object of the invention is to provide a method and an apparatus for easily manufacturing a stranded bead wire which can provide desired performance.

### Disclosure of the Invention

The present invention provides a method for manufacturing a stranded bead wire comprising: rotating an annular core wire in the circumferential direction thereof, while repeating a pseudo linear reciprocating motion of a reel around which a steel wire is wound to have an outside diameter smaller than that of the annular core wire, in which motion the reel is displaced approximately in a radial direction of the annular core wire in a way that it is relatively displaced in an approach direction on one side of a plane crossing the annular core wire, then passed through inside thereof, and displaced in a direction of distance increase on the other side of the plane, whereby the steel wire is tightly wound onto the annular core wire in a spiral pattern in the circumferential direction of the annular core wire. The plane f crossing the annular core wire refers to a plane on which the arc of the annular core wire lies.

Using the above constitution, the pseudo linear reciprocating motion of the reel of steel wire is provided, in which the reel of steel wire is displaced in a direction of approaching the annular core wire on one side of the plane crossing the annular core wire, then passed through inside thereof, and displaced in a direction of distance increase on the other side of the plane. This permits the reel of steel wire to reciprocate with its winding axis being not inclined relative to the rotational axis of the annular core wire. Therefore, the steel wire can be wound tightly onto the annular core wire being rotating in the circumferential direction without twisting the steel wire along its cross section. More specifically, there is no deformation of the cross section of the steel wire, and therefore no twisting stress exerted on the steel wire. In addition, the steel wire generally has a high rigidity and strength. Thus , around the reel is preferably wound the steel wire to have an outside diameter smaller than that of the annular core wire in such a manner that it is bent with a force equal to or greater than its bending yield point. Turning the pre-bent steel wire around the annular core wire in such manner allows the steel wire to be tightly wound along and onto the annular core wire. Thus, little bending stress is exerted on the steel wire in the process of winding onto the annular core wire. Therefore, the manufacturing method of the present invention can appropriately and easily manufacture a stranded bead wire which allows the steel wire to be tightly wound onto the annular core wire, providing an integral form without breakdown of the steel wire. In such stranded bead wire, the same length of the steel wire is used for winding onto the annular core wire for each circumferential rotation of the annular core wire. This allows the windings to be subject to nearly an equal load per unit length, which is exerted while driving or the like. Thus, the stranded bead wire can provide a high strength and durability, a sufficient force for a tire to tightly joint a wheel, and excellent driving stability. The number of the pseudo linear reciprocating motions for each circumferential rotation of the annular core wire may be predetermined as appropriate, and therefore the number of windings (turns) of the steel wire may also be predetermined.

A stranded bead wire manufacturing apparatus of an embodiment according to the method for manufacturing the stranded bead wire of the present invention is described as follows.

The present invention provides a stranded bead wire manufacturing apparatus comprising: a core wire rotating means for rotating the annular core wire in the circumferential direction thereof; a free rotational reel around which the steel wire to be wound onto the annular core wire is wound to have an outside diameter smaller than that of the annular core wire; and a reciprocable displacement means for repeating the pseudo linear reciprocating motion of the free rotational reel in which motion the reel is displaced approximately in the radial direction of the annular core wire in a way that it is relatively displaced in an approach direction on one side of a plane f (See FIGs. 2, 3, 13 and 14) crossing the annular core wire, then passed through inside thereof , and displaced in a direction of distance increase on the other side of the plane, wherein, while the annular core wire is rotated by the core wire rotating means, the free rotational reel repeats the pseudo linear reciprocating motion relative to the annular core wire via the reciprocable displacing means, whereby the steel wire is tightly wound onto the annular core wire in a spiral pattern in a circumferential direction of the annular core wire. The plane f crossing the annular core wire refers to a plane on which the arc of the annular core wire lies. The free rotational reel is adapted to freely rotate about its free rotational shaft when the steel wire, wound around the free rotational reel, is being wound onto the annular core wire.

Using the above constitution, the manufacturing apparatus is adapted to manufacture a stranded bead wire by repeating the pseudo linear reciprocating motion of the free rotational reel in a way that the free rotational reel is displaced in a direction approaching the annular core wire on one side of the plane crossing the annular core wire, then passed through inside thereof, and displaced in a direction of distance increase on the other side of the plane, so that the free rotational axis of the free rotational reel is not inclined relative to the rotational axis of the annular core wire, whereby the steel wire is tightly wound onto the annular core wire in a spiral pattern. Preferably, around the free rotational reel is wound the steel wire to have an outside diameter smaller than that of the annular core wire in such a manner that it is bent with a force equal to or greater than its bending yield point. More specifically, the manufacturing apparatus of the present invention allows the pre-bent steel wire to be tightly wound along and onto the annular core wire with no twisting stress exerted on the steel wire, as is the case with the aforementioned manufacturing method. Thus, no great force is needed to wound the steel wire tightly onto the annular core wire, thereby appropriately and easily manufacturing a desired stranded bead wire having the steel wire and the annular core wire formed integral with each other. Such stranded bead wire can also provide a high strength and durability as well as excellent driving stability aspreviously stated. The number of rotations of the annular core wire by the core wire rotating means and the number of the pseudo linear reciprocating motions via the reciprocable displacement means may be predetermined as appropriate, and accordingly, the number of windings (turns) of the steel wire may also be predetermined.

In the manufacturing apparatus of the present invention, the free rotational reel has an outside diameter smaller than that of the annular core wire. This allows the free rotational reel to pass through inside of the annular core wire and to be displaced to both sides of the plane crossing the annular core wire.

In addition, a proposal is made for the manufacturing apparatus wherein the reciprocable displacement means includes: a core wire up-down device for supporting the annular core wire and displacing it up and down along the rotational axis; and a reel displacement device for supporting the free rotational reel for free rotation and permitting it to reciprocate in the inward and outward directions of the annular core wire approximately in the radial direction thereof, and the pseudo linear reciprocating motion is repeated according to the actuation timing at which the reel displacement device displaces the free rotational reel once per up or down displacement of the annular core wire by the core wire up-down device.

Using the above constitution, under controlling the actuation timing between up-down displacement of the annular core wire and reciprocation of the free rotational reel, when the free rotational reel is displaced inward from the outside of the annular core wire (in the direction of approach) once, the annular core wire is displaced up (or down) once so that the free rotational reel can passes through inside thereof, and then, when the free rotational reel is displaced outward from the inside of the annular core wire (in the direction of distance increase) once, the annular core wire is displaced down (or up) once. This results in a plane displacement of the free rotational reel. This allows the steel wire to be wound tightly onto the annular core wire in a spiral pattern without twisting the steel wire along its cross section. The pseudo linear reciprocating motion according to the aforementioned actuation timing advantageously enables stable manufacturing of a stranded bead wire in the form of the steel wire tightly wound onto the annular core wire, based on the rotational speed of the annular core wire.

The core wire up-down device may also be designed to actuate the entirety of the annular core wire upward and downward such that the plane crossing the annular core wire is horizontal, or designed to actuate a portion of the annular core wire between the points of intersection of the reciprocating free rotational reel upward and downward to tilt the plane crossing the annular core wire. As such core wire up-down device, a drive unit, such as a pneumatic or hydraulic cylinder, cam, crank and stepping motor, can preferably be used.

Further, another proposal is made for the manufacturing apparatus wherein the reel displacement device includes a guide rail arranged in association with the inside and the outside of the annular core wire approximately in the radial direction thereof for guiding reciprocating motion of the free rotational reel, and a core inserting/removing recess for inserting the annular core wire displaced down by the core wire up-down device is formed in the guide rail at a point of intersection of the annular core wire such that the recess crosses the guide rail relative to its longitudinal direction.

The core inserting/removing recess forms a recessed space in which the annular core wire, displaced by the core wire up-down device, is placed, so that the annular core wire intersects the guide rail within the recessed space. Using the above constitution, the guide rail is provided as a displacement route along which the free rotational reel reciprocates, and the annular core wire is placed within the recessed space of the core inserting/removing recess. This can prevent the free rotational reel from being interfered with by the annular core wire so that it can be displaced across the annular core wire in the inward and outward directions thereof (in the direction of approach or in the direction of distance increase). The core wire up-down device displaces the annular core wire up from the core inserting/removing recess. Therefore, the free rotational reel can move across the recessed space formed between the annular core wire and the guide rail in the inward and outward directions of the annular core wire (in the direction of distance increase or in the direction of approach). In other words, the free rotational reel can reciprocate along the guide rail on both sides of the plane crossing the annular core wire.

Further, still another proposal is made for the manufacturing apparatus wherein the reel displacement device includes: a movable support for supporting the free rotational reel for free rotation and permitting it to reciprocate along the guide rail; and depressing actuators facing each other along the guide rail for advancing and retracting in the inward and outward directions of the annular core wire, and an advancing-retracting motion, in which the movable support is continuously advanced and retracted in opposite directions along the guide rail, is repeated by the depressing actuators, thereby providing reciprocation motion of the free rotational reel.

Using the above constitution, the depressing actuators facing each other alternately press the movable support, which permits the free rotational reel to reciprocate in the inward and outward directions of the annular core wire. The depressing actuator is designed to retract immediately after it advanced to press the movable support in order not to interfere with up-down displacement of the annular core wire. Thus, the reel displacement device allows reciprocation of the free rotational reel and up-down displacement of the annular core wire to smoothly continue. Preferably, the depressing actuator includes: a drive unit, such as a pneumatic or hydraulic cylinder , cam, crank and stepping motor; and a press portion being coupled with the drive unit for pressing the movable support.

Further, still another proposal is made for the manufacturing apparatus wherein the reel displacement device includes: a movable support for supporting the free rotational reel for free rotation and permitting it to reciprocate along the guide rail; and an action rod that is switched to either a state of engagement or a state of disengagement with the movable support and permitting the movable support to reciprocate along the guide reel in the state of engagement, and the action rod is alternately switched between the state of engagement, in which the action rod permits the movable support to reciprocate, and the state of disengagement, in which a passing space for displacing the annular core wire up or down is formed between the action rod and the movable support.

Using the above constitution, the state of engagement between the action rod and the movable support is switched to the state of disengagement, in which the action rod is disengaged from the movable support, once per reciprocating motion of the movable support by the action rod, and the annular core wire can be displaced up and down through the passing space formed in the state of disengagement. When the annular core wire passes through the passing space, the action rod is engaged again with the movable support, permitting it to reciprocate. This prevents the action rod for permitting the movable support to reciprocate from interfering with up-down displacement of the annular core wire. This allows reciprocation of the free rotational reel and up-down displacement of the annular core wire to smoothly continue. Preferably, the action rod is connected to a drive unit, such as a pneumatic or hydraulic cylinder, cam, crank and stepping motor, and advanced and retracted by the drive unit. An electromagnet or a sucker may also be used for switching between the state of engagement and the state of disengagement.

Further, still another proposal is made for the manufacturing apparatus wherein the reel displacement device includes: a stop that is connected to one of the movable support and the action rod by a spring biased hinge; and a reception that is that is disposed in the other and engageable with the stop; the stop engages the reception by a biasing force of the spring biased hinge to make the state of engagement; and the annular core wire displaced up or down by the core wire up-down device forces the stop to be open against the biasing force of the spring biased hinge to make the state of disengagement.

Using the above constitution, up-down displacement of the annular core wire forces the stop, which engages the reception by the biasing force of the spring biased hinge, to be open out of the reception, to make the state of disengagement. Therefore, displacement of the annular core wire itself results in forming the passing space, and after the displacement, the stop engages the reception again by the biasing force of the spring biased hinge. This allows switching between the state of engagement and the state of disengagement, depending on the reciprocation of the movable support and up-down displacement of the annular core wire, permitting the movable support and the annular core wire to smoothly move.

Further, still another proposal is made for the manufacturing apparatus wherein the reciprocable displacement means includes a seesaw device for tilting a tilting plane inward and outward of the annular core wire, the tilting plane being arranged in association with the inside and outside of the annular core wire approximately in the radial direction thereof; the seesaw device includes: a movable support for supporting the free rotational reel for free rotation; a guide rail being arranged in association with the inside and the outside of the annular core wire in a tilt motion direction on the tilting plane for guiding reciprocation of the movable support; and a core inserting/removing recess being formed at a point of intersection of the annular core wire such that the recess crosses the guide rail relative to its longitudinal direction; and the pseudo linear reciprocating motion is repeated, in which the guide rail is tilted to one side such that the annular core wire comes into the core inserting/removing recess to displace the movable support above the annular core wire, and then tilted to the other side to displace the movable support below the annular core wire.

Using the above constitution, the seesaw device tilts the tilting plane inward and outward of the annular core wire, based on which, the guide rail is tilted to displace the movable support therealong so as to cross the annular core wire (one side and the other) above and below it (in the direction of approach and in the direction of distance increase). When the free rotational reel stays on the side of the annular core wire, the seesaw device tilts on the other side, so that the free rotational reel passes through inside the annular core wire. Thus, the guide rail is tilted in a predetermined tilt motion range between inward and outward of the annular core wire. This results in a plane displacement of the free rotational reel, which prevents the free rotational axis of the free rotational reel from being inclined relative to the rotational axis of the annular core wire. This allows the steel wire to be wound tightly onto the annular core wire in a spiral pattern without twisting the steel wire along its cross section. In this embodiment, the guide rail is tilted by the seesaw device, which permits the movable support to slide down. Thus, no device for reciprocation of the movable support is needed. In a preferred constitution of the seesaw device, a guide rail is disposed on a flat plate or the like defined as a tilting plane, or the guide rail is directly tilted with its tilting surface defined as a tilting plane.

Further, still another proposal is made for the manufacturing apparatus wherein the seesaw device further includes: a support column for tiltably supporting the tilting plane; and an action rod being rotatably coupled at a point of action offset in the radial direction from a pivotal point supported by the support column; and displacing the point of action up and down by the action rod allows the tilting plane to tilt about the pivotal point on both sides.

Using the above constitution, actuating the action rod upward and downward allows the point of action to move up and down from the pivotal point to tilt the tilting plane inward and outward of the annular core wire. Thus, the guide rail tilts based on the tilt motion of the tilting plane, which permits the moving support member to reciprocate above and below the annular core wire. The tilt angle of the guide rail can be relatively easily adjusted by controlling up/down actuation of the action rod. Therefore, for example, the tilt angle can be controlled or varied depending on the weight of the free rotational reel, and be easily preset depending on the annular diameter or core wire diameter of the annular core wire, or the wire diameter of the steel wire. Preferably, the action rod is connected to a drive unit, such as a pneumatic or hydraulic cylinder, cam, crank and stepping motor, and advanced and retracted by the drive unit.

Further, still another proposal is made for the manufacturing apparatus wherein the guide rail is formed in an arc shape whose arc center is approximately at the point where the steel wire is being wound tightly onto the annular core wire. Using the above constitution, a distance, between the point of the reciprocating free rotational reel and the point where the steel wire is being wound tightly onto the annular core wire, can be generally maintained. Under such conditions, the steel wire, wound off the free rotational reel and then wound onto the annular core wire, is constantly tensioned. This reduces chances of causing the steel wire to loosen, while allowing the steel wire to be wound evenly, tightly onto the annular core wire in a spiral pattern, and is superior in integration of the annular core wire 2 and the steel wire 3.

Further, still another proposal is made for the manufacturing apparatus wherein the reciprocable displacement means includes: a reel shift device for shifting the position of the free rotational reel to both sides of the plane crossing the annular core wire; and a core wire displacement device for supporting the annular core wire and permitting it to reciprocate approximately in the radial direction such that the free rotational reel is displaced inward and outward of the annular corewire, and the pseudo linear reciprocating motion is repeated according to the timing at which the annular corewire is displaced, by the core wire displacement device, back or forth once per position shift of the free rotational reel by the reel shift device.

Using the above constitution, under controlling the actuation timing between position shift of the free rotational reel to both sides of the plane crossing the annular core wire, and reciprocating motion of the annular core wire, the free rotational reel is relatively displaced inward from the outside of the annular core wire (in the direction of approach) once per forth motion of the annular core wire, then the position of the free rotational reel is shifted once to pass through inside the annular core wire, and then the free rotational reel is relatively displaced outward from the inside of the annular core wire (in the direction of distance increase) once per back motion of the annular core wire. This results in a plane displacement of the free rotational reel, allowing the steel wire to be wound tightly onto the annular core wire in a spiral pattern without twisting the steel wire along its cross section. Preferably, the core wire displacement device includes: a drive unit, such as a pneumatic or hydraulic cylinder, cam, crank and stepping motor; and a support for supporting the annular core wire so that the drive unit permits the support to reciprocate.

More preferably, the core wire displacement device further includes a core wire guide rail being formed approximately in the radial direction of the annular core wire for performing it to reciprocate. The core wire guide rail can provide a displacement route along which the annular core wire reciprocates while achieving smooth reciprocation thereof.

Further, still another proposal is made for the manufacturing apparatus wherein the reciprocable displacement means includes: a reel shift device for shifting the position of the free rotational reel to both sides of the plane crossing the annular core wire; and a reel displacement device for permitting the free rotational reel whose position is shifted by the reel shift device to reciprocate inward and outward of the annular core wire approximately in the radial direction thereof, and the pseudo linear reciprocating motion is repeated according to the timing at which the free rotational reel is displaced by the reel displacement device once per position shift of the free rotational reel by the reel shift device.

Using the above constitution, the position of the annular core wire rotating in the circumferential direction is fixed, and under controlling the actuation timing between position shift of the free rotational reel to both sides of the annular core wire, and reciprocating motion of the free rotational reel, the free rotational reel is displaced inward from the outside of the annular core wire (in the direction of approach), then the position of the free rotational reel is shifted once to pass through inside the annular core wire, and then the free rotational reel is displaced outward from the inside of the annular core wire (in the direction of distance increase). This results in a plane displacement of the free rotational reel, allowing the steel wire to be wound tightly onto the annular core wire in a spiral pattern without twisting the steel wire along its cross section. Another constitution of the reel displacement device may be used. For example, the reel displacement device reciprocates the entirety of the reel shift device to reciprocate, or only part of the reel shift device, which supports the free rotational reel and shifts the position thereof. The reel displacement device preferably includes a drive unit, such as a pneumatic or hydraulic cylinder, cam, crank and stepping motor, so that the drive unit permits the free rotational reel to reciprocate.

Further, still another proposal is made for the manufacturing apparatus wherein the reel shift device includes : a shift support for supporting the free rotational reel for free rotation on both sides of its free rotational shaft, which has a magnet element on each side of the free rotational reel; a magnet support having electromagnets, which are turned on/off, facing each other, and being provided on one side of the plane crossing the annular core wire; and a magnetic displacement unit being provided on the other side for advancing and retracting the electromagnets along the rotational axis of the annular core wire, and the electromagnets on the magnetic displacement unit and on the magnet support are alternately turned on once per advancing motion of the magnetic displacement unit to the one side from the other, thereby transferring the shift support between the electromagnets to shift the position of the free rotational reel between both sides of the plane crossing the annular core wire.

Using the above constitution, after the magnetic displacement unit advances to the other side, either one of the electromagnets on the magnetic displacement unit and on the magnet support is turned on while the other is turned off. The shift support including the magnet elements is therefore held and transferred alternately between these electromagnets. A transfer of the shift support is completed once per advancing-retracting motion of the magnetic displacement unit. The position of the free rotational reel on the shift support is therefore shifted to both sides of the annular core wire. The magnetic displacement unit is designed to retract immediately after it advanced once to transfer the shift support. This allows the pseudo linear reciprocating motion to smoothly continue. Preferably, the magnetic displacement unit includes: a drive unit, such as a pneumatic or hydraulic cylinder, cam, crank and stepping motor; and an actuating shaft being coupled with the drive unit and having an electromagnet on its advancing-side end.

### Brief Description of Drawings

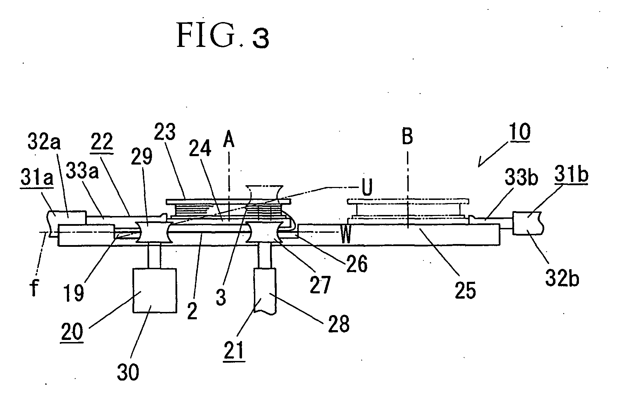

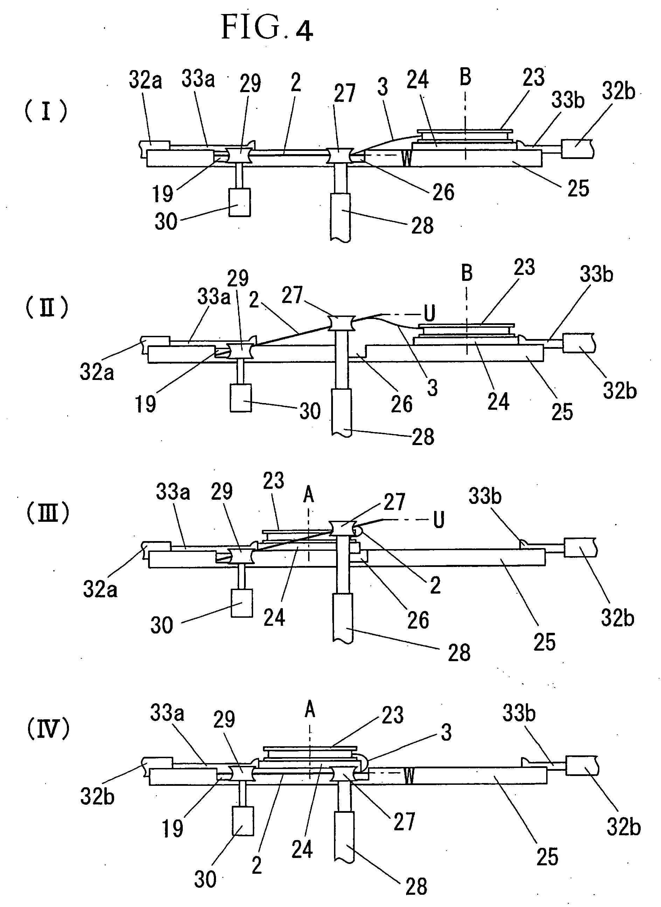

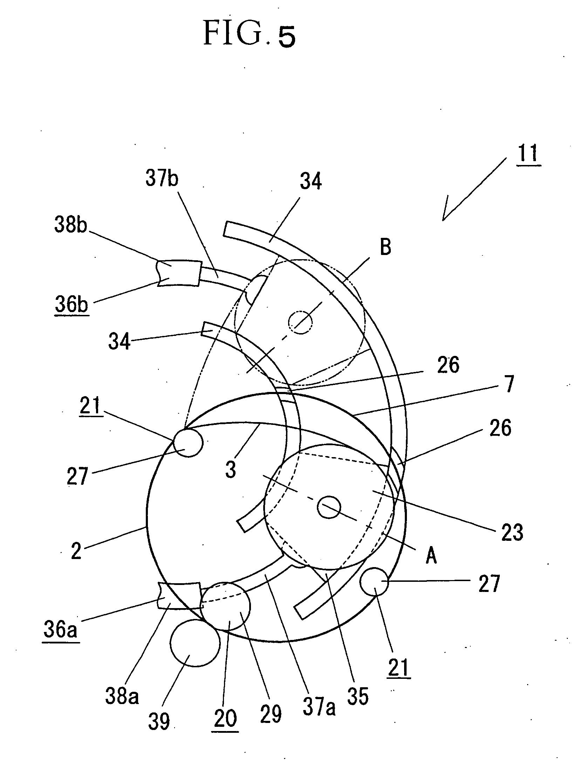

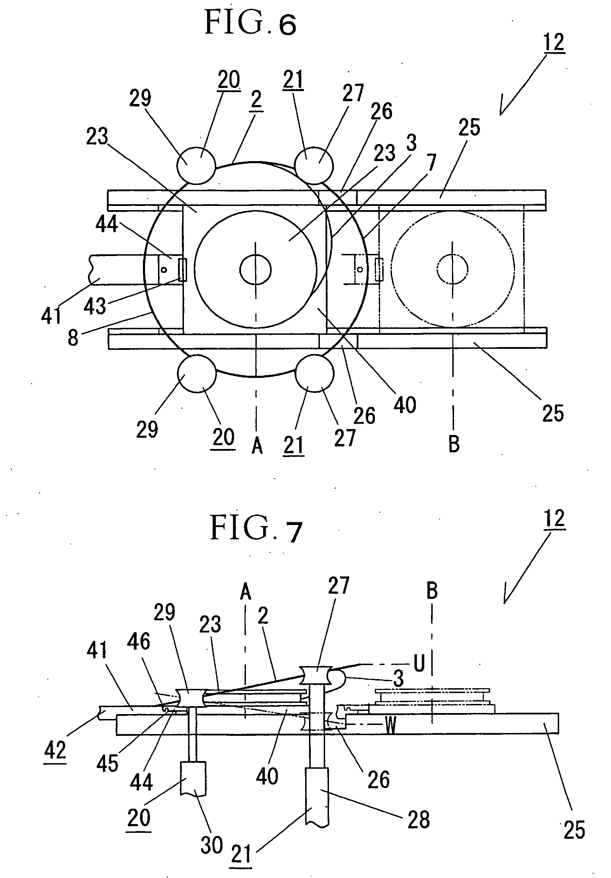

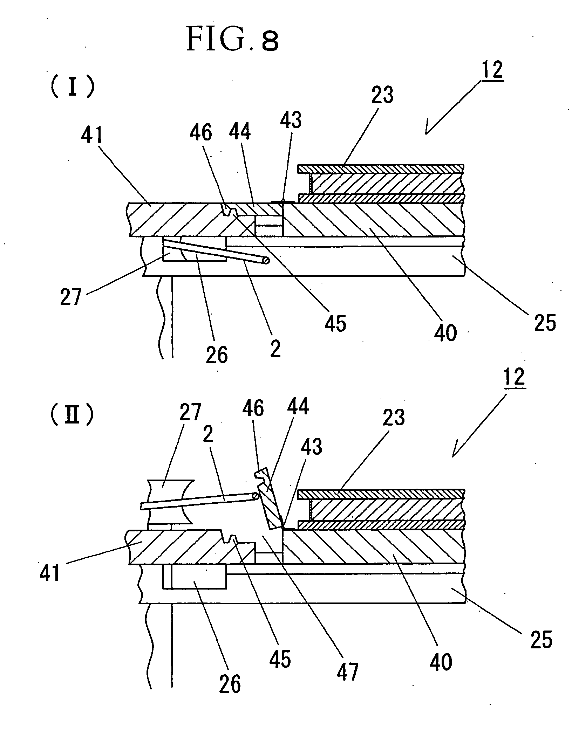

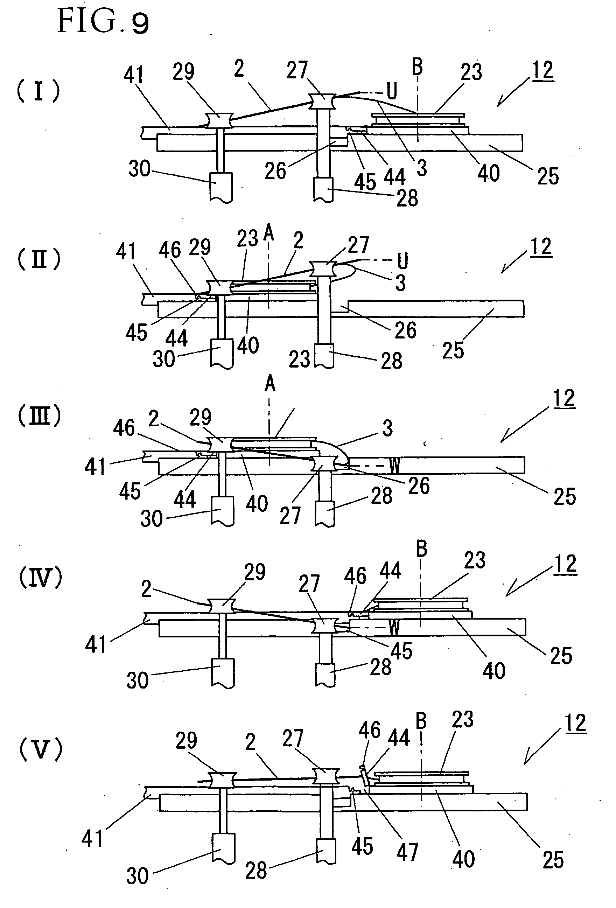

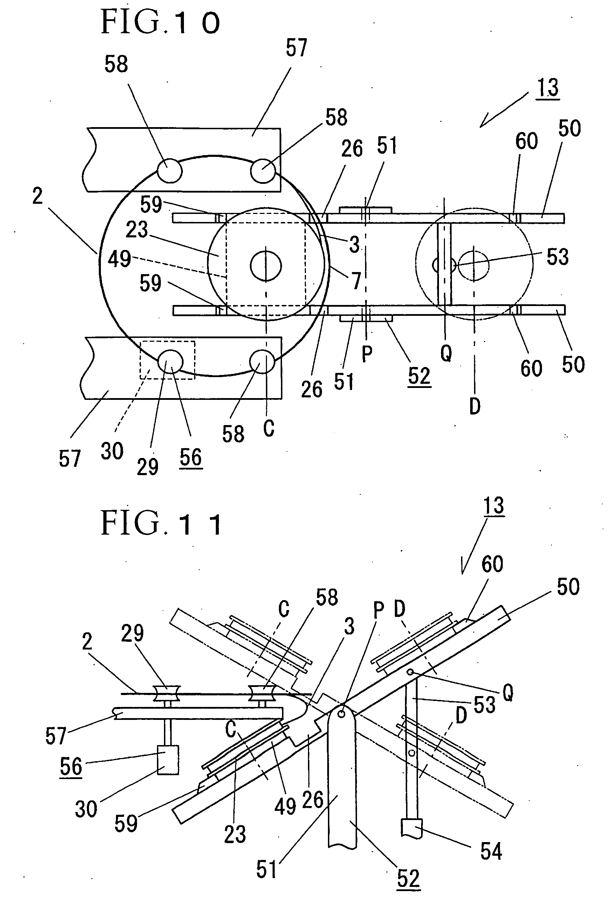

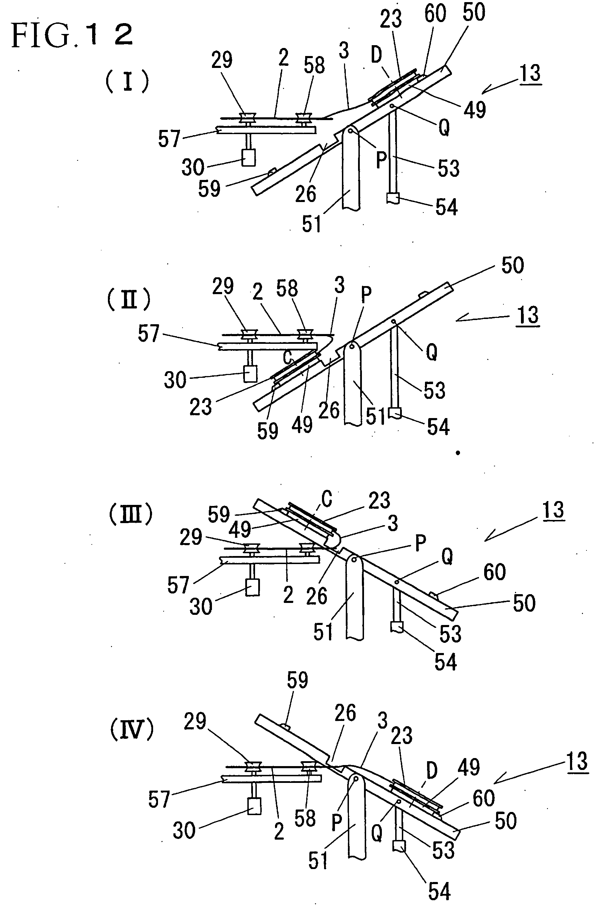

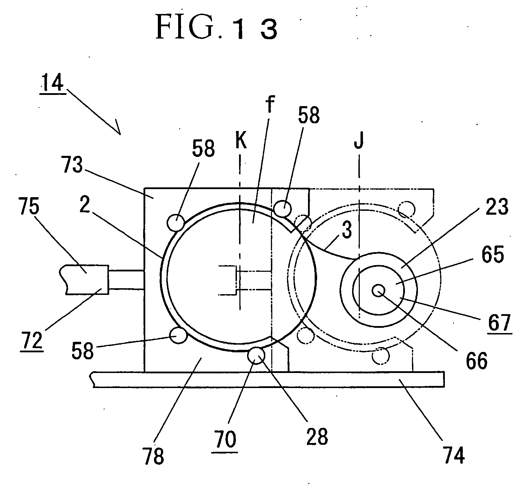

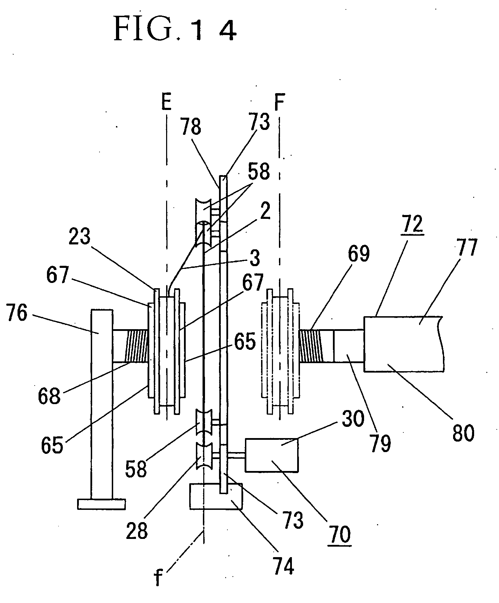

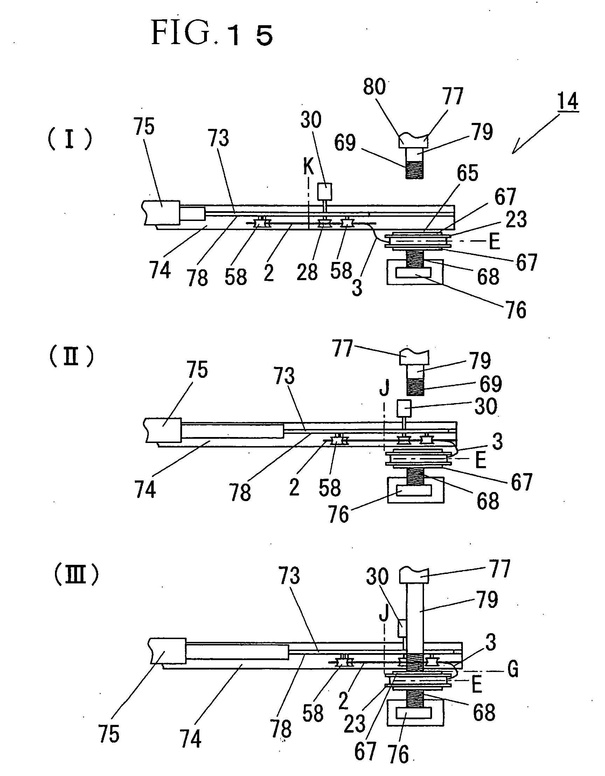

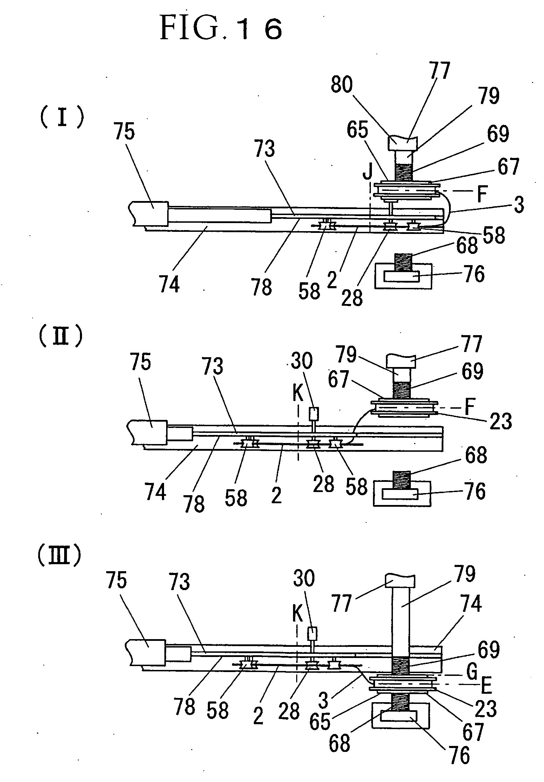

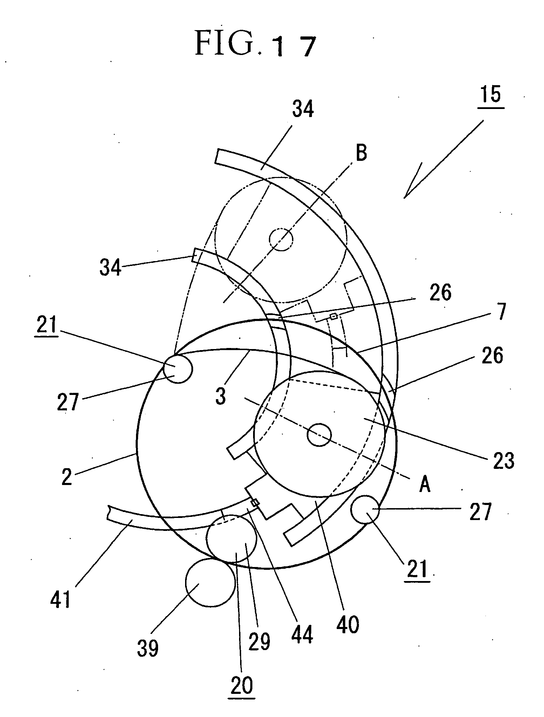

FIG. 1 is a schematic view, showing a stranded bead wire 1. FIG. 2 is a top plan view, showing a stranded bead wire manufacturing apparatus 10 of a first embodiment. FIG. 3 is a side view, showing the stranded bead wire manufacturing apparatus 10 of the first embodiment. FIGs. 4(I) to 4(IV) are explanatory views, illustrating manufacturing processes using the stranded bead wire manufacturing apparatus 10. FIG. 5 is a top plan view, showing a stranded bead wire manufacturing apparatus 11 of a second embodiment. FIG. 6 is a top plan view, showing a stranded bead wire manufacturing apparatus 12 of a third embodiment. FIG. 7 is a side view, showing the stranded bead wire manufacturing apparatus 12 of the third embodiment. FIGs. 8(I) and 8(II) are explanatory views, illustrating a state of engagement and a state of disengagement between a stop 44 and a reception 45 of the third embodiment. FIGs. 9(I) to 9(V) are explanatory views, illustrating manufacturing processes using the stranded bead wire manufacturing apparatus 12. FIG. 10 is a top plan view, showing a stranded bead wire manufacturing apparatus 13 of a fourth embodiment. FIG. 11 is a side view, showing the stranded bead wire manufacturing apparatus 13 of the fourth embodiment. FIGs. 12(I) to 12(IV) are explanatory views, illustrating manufacturing processes using the stranded bead wire manufacturing apparatus 13. FIG. 13 is a top plan view, showing a stranded bead wire manufacturing apparatus 14 of a fifth embodiment. FIG. 14 is a side view, showing the stranded bead wire manufacturing apparatus 14 of the fifth embodiment. FIGs. 15(I) to 15(III) are explanatory views, illustrating manufacturing processes using the stranded bead wire manufacturing apparatus 14. FIGs. 16(I) to 16(III) are explanatory views continued from FIGs. 15(I) to 15(III), illustrating the manufacturing processes using the stranded bead wire manufacturing apparatus 14. FIG. 17 is a top plan view, showing a stranded bead wire manufacturing apparatus 15, in which arcuate guide rails 34, 34 are disposed. FIG. 18 is a schematic view of a conventional core-forming type bead wire 5.

### Best Mode for Carrying Out the Invention

For further details of the present invention, embodiments thereof are described with reference to the accompanying drawings.

FIG. 1 shows a stranded bead wire 1 manufactured by respective manufacturing apparatuses 10, 11, 12, 13 and 14 according to the present invention. The stranded bead wire 1 is formed by turning a single steel wire 3 tightly around an annular core wire 2 in a spiral pattern without twisting the steel wire 3 along its cross section, and repeating this operation plural times so as to cause turns of the steel wire 3 to closely contact each other sequentially for covering the entirety of the annular core wire 2. In this stranded bead wire 1, since the steel wire 3 is wound tightly onto the annular core wire 2 with a relatively small bending force, there occurs no repulsive force of the steel wire 3, which may cause the steel wire 3 to become apart from the annular core wire 2, so that the annular core wire 2 and the steel wire 3 are integral with each other in so-called a natural state.

Such stranded bead wire 1 is favorably manufactured by the manufacturing apparatuses 10 to 14, as shown in respective embodiments 1 to 5 hereinafter described in details.

A type of bead wire, to be embedded into a tire used for cars, is exemplified as the stranded bead wire 1 manufactured by the following respective manufacturing apparatuses 10 to 14. The bead wire used for cars may also take various forms depending on tire size or applications. In the embodiments 1 to 5 of the present invention, a steel wire 3 having a wire diameter of approximately 1.4 mm, for example, is used to turn or wind onto an annular core wire 2 having a wire diameter of approximately 3 mm and an annular diameter of approximately 400 mm. The steel wire 3 is wound onto the annular core wire 2 with seven turns in a spiral pattern for each circumferential rotation of the annular core wire 2. This winding operation is repeated for each of approximately eight rotations of the annular wire core 2 in a way that, for every rotation of the annular core wire 2, each turn of the steel wire 3 comes into close contact and alignment with the last turn under a tensional condition, resulting in covering the entirety of the annular core sire 2 with the steel wire 3. In all embodiments 1 to 5, the stranded bead wire 1 should be manufactured in the same form.

### (First Embodiment)

The stranded bead wire manufacturing apparatus 10 of a first embodiment according to the present invention is described with reference to FIGs. 2 to 4.

As shown in FIGs. 2 and 3, the stranded bead wire manufacturing apparatus 10 includes: a free rotational reel 23 around which the steel wire 3 to be wound onto the annular core wire 2 is wound to have an outside diameter smaller than that of the annular coil wire 2; a core wire rotating device 20 for supporting the annular core wire 2 and rotating it by rotating rollers 29 which are rotated by drive motors 30; and a core wire up-down device 21 for supporting the annular core wire 2 and displacing the annular core wire 2 up and down by up-down rollers 27 which are actuated upward and downward by up-down cylinders 28. The manufacturing apparatus 10 further includes a reel displacement device 22 having: a movable support 24 for rotatably supporting the free rotational reel 23; guide rails 25 for guiding reciprocation of the movable support 24; and depressing actuators 31a, 31b that are advanced and retracted by actuator cylinders 32a, 32b to permit the movable support 24 to reciprocate.

The core wire rotating device 20 constitutes a core wire rotating means of the present invention, while the core wire up-down device 21 and the reel displacement device 22 constitute a reciprocable displacement means of the present invention. Each device is hereinafter described in details.

Around the free rotational reel 23 is wound the steel wire 3 in such a manner that it is bent with a force equal to or greater than its bending yield point. As shown in FIGs. 2 and 3, the free rotational reel 23 is provided for free rotation about its free rotational shaft on the upper surface of the movable support 24. In generally radial direction of the annular core wire 2 supported by the rotating rollers 29 and the up-down rollers 27, two guide rails 25, 25 are provided linearly and parallel to each other throughout the inside and outside of the annular core wire 2. A distance between the two guide rails 25, 25 is preset smaller than a diameter of the annular core wire 2. The movable support 24 is disposed movably along these two guide rails 25, 25 by guide wheels, guide balls or the like (not shown).

The guide rails 25, 25 have core inserting/removing recesses 26, 26, and core holding recesses 19, 19 respectively formed at four points of intersection of the annular core wire 2 and the two guide rails such that these recesses cross the guide rails 25, 25 relative to the longitudinal direction. The annular core wire 2 is inserted into each space of these four recesses. This allows the annular core wire 2 to stay below the movable support 24 movable along the guide rails 25 (See FIG. 4(I)). Thus, the core inserting/removing recesses 26, 26 are formed in an area where the moving support 24 passes across the annular core wire 2. In contrast, the core holding recesses 19, 19 are formed respectively on the side opposite to the core inserting/removing recesses 26, 26 relative to the center of the annular core wire 2.

On each outside of the guide rails 25, 25 adjacent to the core inserting/removing recesses 26, 26, respective hourglass-shaped up-down rollers 27, 27 with each axially middle portion constricted are disposed to support the annular core wire 2. The up-down rollers 27, 27 are rotatably coupled to the up-down cylinders 28, 28, which are driven in the up-down direction along the rotational axis of the annular core wire 2. The up-down cylinders 28, 28 actuate the up-down rollers 27, 27 upward and downward, thereby displacing the annular core wire 2 up and down (See FIGs. 4(I) to 4(IV)). The up-down rollers 27, 27 have a preset bottom position W where they are displaced to their lowest positions by the up-down cylinders 28, 28 so as to place the annular core wire 2 in the recessed spaces of the core inserting/removing recesses 26, 26. A highest position U of each up-down roller 27, 27 is so preset that the movable support 24 for supporting the free rotational reel 23 passes along the guide rails 25, 25 below the annular core wire 2 which is displaced up by the up-down rollers 27, 27. The up-down cylinders 28, 28 are so controlled as to be driven in the same manner in synchronization with each other.

In contrast, on each outside of the guide rails 25, 25 in the vicinity of the core holding recesses 19, 19, the hourglass-shaped rotating rollers 29, 29 are provided. The rotating rollers 29, 29 have their respective rotational shafts coupled to the drive motors 30, 30, which in turn rotate the rotating rollers 29, 29. The rotation of the rotating rollers 29, 29 allows the annular core wire 2 to rotate in the circumferential direction. The rotating rollers 29, 29 are disposed at approximately the same height as the core holding recesses 19, 19 such that a core holding section 8 of the annular core wire 2 between the rotating rollers 29, 29 is always placed within the recessed spaces of the core holding recesses 19, 19. The drive motors 30, 30 are so controlled as to rotate in the same direction and manner in synchronization with each other.

The annular core wire 2 supported by such up-down rollers 27 and the rotating rollers 29 stays within the core inserting/removing recesses 26, 26 and the core holding recesses 19, 19 when the up-down rollers 27, 27 are displaced to the lowest position W by the up-down cylinders 28, 28. The annular core wire 2 is wholly positioned below the movable support 24 supported by the guide rails 25, 25 (See FIG. 4(I)). This allows the movable support 24 to pass above a passing section 7 of the annular core wire 2 between the up-down rollers 27, 27 (above the plane f crossing the annular core wire 2). In contrast, when the up-down cylinders 28, 28 displace the up-down rollers 27, 27 up to the highest position U, the annular core wire 2 is tilted down from the passing section 7 between the up-down rollers 27, 27 toward the core holding section 8 between the rotating rollers 29, 29. This allows the passing section 7 of the annular core wire 2 to be positioned above the guide rails 25, 25 (See FIG. 4 (II)) so that the movable support 24 can pass below the annular core wire 2 (below the plane f crossing the annular core wire 2).

In contrast, the depressing actuators 31a, 31b, driven by the actuator cylinders 32a, 32b for advancing and retracting depressing shafts 33a, 33b in the radial direction of the annular core wire 2, are disposed respectively at both ends between which the movable support 24 reciprocates. The depressing actuators 31a, 31b are disposed to advance and retract the respective depressing shafts 33a, 33b so as to face to each other. The depressing actuator 31b advances the depressing shaft 33b using the actuator cylinder 32b, thereby pressing to move the stopped movable support 24 from a support position B that is preset outside of the annular core wire 2 toward a support position A that is preset inside of the annular core wire 2. The depressing shaft 33b is then immediately retracted back to a position to stop the movable support 24 at the support position B. The movable support 24 is adapted to be stopped at the support position A by the depressing shaft 33a. In this manner, the movable support 24 is displaced from the support position B to the support position A (in the direction of approach). Likewise, the depressing actuator 31a is driven with the actuator cylinder 32a to advance and retract the depressing shaft 33a, thereby displacing the movable support 24 from the support position A to the support position B (in the direction of distance increase). The depressing actuators 31a, 31b are alternately actuated as described above, which permits the free rotational reel 23 to reciprocate parallel to the annular core wire 2 through the inside and the outside thereof.

In addition, a controller (not shown) is provided for controlling the up-down cylinders 28, 28, the drive motors 30, 30, and the actuator cylinders 32a, 32b, all of which are actuated respectively at a predetermined actuation timing. In this controller, after the up-down cylinders 28, 28 actuate the up-down rollers 27, 27 either upward or downward, either one of the depressing shafts 33a, 33b is advanced and retraced by the actuator cylinder 32a or 32b. In other words, the movable support 24 is displaced once per up or down displacement of the annular core wire 2. The drive motors 30, 30 rotate the annular core wire 2 once per seven reciprocating motions of the free rotational reel 23 by the up-down cylinder 28 and the actuator cylinder 32.

Now, manufacturing processes of the stranded bead wire 1 using the stranded bead wire manufacturing apparatus 10 are described with reference to FIGs. 4(I) to 4(IV).

First, the annular core wire 2 is placed along the rotating rollers 29, 29, and the up-down rollers 27, 27, which are positioned at the lowest position W. The free rotational reel 23 with the steel wire 3 wound is placed on the movable support 24 stopped at the support position B outside of the annular core wire 2. The proximal end of the steel wire 3 wound around the free rotational reel 23 is tentatively retained on the annular core wire 2 without twisting the steel wire 3 along its cross section. Then, the drive motors 30, 30, the up-down cylinders 28, 28, and the actuator cylinders 32a, 32b are controlled to actuate according to the aforementioned actuation timing. The drive motors 30, 30 rotate the rotating rollers 29, 29, thereby rotating the annular core wire 2. In synchronization with this operation, the up-down cylinders 28, 28 are driven to actuate the up-down rollers 27, 27 upward. This permits the passing section 7 of the annular core wire 2 staying at the lowest position W to displace up to the highest position U as shown in FIG. 4(I) to FIG. 4 (II) with the annular core wire 2 tilted down from the passing section 7 toward the core holding section 8. Then, as shown in FIG. 4(II) to FIG. 4(III), the actuator cylinder 32b advances the depressing shaft 33b to press and move the stopped movable support 24 from the support position B along the guide rails 25, passing below (on one side) the passing section 7 of the annular core wire 2. The movable support 24 is then stopped by the depressing shaft 33a at the support position A inside of the annular core wire 2. The depressing shaft 33b is then immediately retracted back to the support position B.

Next, as shown in FIG. 4(III) to FIG. 4(IV), the up-down cylinders 28, 28 actuate the up-down rollers 27, 27 downward to displace the passing section 7 of the annular core wire 2 from the highest position U to the lowest position W so that the passing section 7 is placed within the core inserting/removing recesses 26, 26 on the guide rails 25, 25. This permits the free rotational reel 23 to pass through inside of the annular core wire 2. Then, as shown in FIG. 4(IV) to FIG. 4(I), the actuator cylinder 32a advances the depressing shaft 33a to press and move the movable support 24 from the support position A along the guide rails 25, 25, passing below (on the other side) the passing section 7 of the annular core wire 2. Then movable support 24 returns to the support position B and is stopped by the depressing shaft 33b. The depressing shaft 33a is then immediately retracted back to the support position A.

As described above, in the manufacturing apparatus 10 of the present invention, the pseudo linear reciprocating motion is repeated, in which the free rotational reel 23 is displaced below the annular core wire 2 from the outside to the inside thereof, passing through inside of the annular core wire 2, and then displaced above the annular core wire 2 from the inside to the outside thereof, with the free rotational axis not being inclined relative to the rotating annular core wire 2. This allows the steel wire 3 wound around the free rotational reel 23 to be wound off and then tightly wound onto the annular core wire 2 in a spiral pattern without twisting the steel wire 3 along its cross section. Under such conditions, only a relatively smaller bending stress acts on the steel wire 3 and no twisting stress is produced. Therefore, little force is required to wind the steel wire 3 tightly onto the annular core wire 2. This allows the windings of the steel wire 3 to be tight onto the annular core wire 2 extremely in a natural state while there occurs no repulsive force on the windings. Therefore, such extremely good windings of steel wire onto the annular core wire 2 can provide an integral form thereof. Then, the steel wire 3 is wound onto the annular core wire 2 with seven turns per rotation of the annular core wire 2. This operation is repeated eight times in a way that, for every rotation of the annular core wire 2, each turn of the steel wire 3 comes into close contact with the last turn sequentially. Thus, the single steel wire 3 covers the entirety of the annular core wire 2 in a spiral pattern. After eight rotations of the annular core wire 2, the drive motors 30, 30, the up-down cylinders 28, 28, and the actuator cylinders 32a, 32b are stopped and the steel wire 3 from the free rotational reel 23 is cut off at a point close to the aforementioned proximal end of the steel wire 3. Then, the proximal and distal ends of the steel wire 3 are connected using a joint ring, for example. In this manner, a desired stranded bead wire 1 can be manufactured.

### (Second Embodiment)

A stranded bead wire manufacturing apparatus 11 of a second embodiment according to the present invention is described with reference to FIG. 5.

The stranded bead wire manufacturing apparatus 11 is adapted to permit a free rotational reel 23 to reciprocate along curved guide rails 34, 34. The guide rails 34, 34 are formed along a circular arc whose center is generally a point where a wound off steel wire 3 around the free rotational reel 23 is tightly wound.

As is the case with the manufacturing apparatus 10 of the first embodiment, the guide rails 34, 34 have core inserting/removing recesses 26, 26 respectively formed at the points of intersection of the annular core wire 2 and the two guide rails. Ends of the guide rails 34, 34 are assumed inside of the annular core wire 2. A movable support 35 for supporting the free rotational reel 23 for free rotation is also provided, which is movable along the curved guide rails 34, 34.

Up-down rollers 27, 27, for supporting the annular core wire 2 and displacing it up and down between the lowest position W, at which the annular core wire 2 is placed within the recessed spaces of the core inserting/removing recesses 26, 26, and the highest position U, are connected to core wire up-down devices 21, 21. The up-down rollers 27, 27 are respectively disposed near a position at which the steel wire 3 is wound tightly onto the annular core wire 2 and at the opposite position in the radial direction of the annular core wire 2. The up-down rollers 27, 27 are adapted to support the annular core wire 2 inside the annular core wire 2. On the side opposite to the points of intersection of the annular core wire 2 and the guide rails 34, 34, a rotating roller 29 for supporting the annular core wire 2, coupled to the drive motor 30, and a press-contact roller 39, which faces the rotating roller 29, for pressing the annular core wire 2 against the rotating roller 29 are disposed. The rotating roller 29 and the press-contact roller 39 are each provided at a position above the guide rails 34, 34. The press-contact roller 39 can rotate following the rotation of the rotating roller 29, and is displaced between a press-contact position where the press-contact roller 39 is press-contacted with the rotating roller 29, and a position apart from the rotating roller 29 (not shown).

The core wire up-down devices 21, 21 actuate the up-down rollers 27, 27 upward and downward, which allows the passing section 7 of the annular core wire 2 between the up-down rollers 27, 27 to move up and down. The up-down rollers 27, 27 are actuated downward, and the passing section 7 of the annular core wire 2 is displaced down to the lowest position W, to place the passing section 7 within the core inserting/removing recesses 26, 26. This permits the passing section 7 to be positioned below the movable support 35 supported by the guide rails 34, 34. In contrast, the up-down rollers 27, 27 are actuated upward, and the passing section 7 of the annular core wire 2 is displaced up to the highest position U so that the movable support 35 can pass below the passing section 7.

In contrast, depressing actuators 36a, 36b are provided, which permits the movable support 35 to reciprocate between a support position A that is preset inside of the annular core wire and a support position B that is preset outside thereof along the guide rails 34, 34, as is the case with the first embodiment. The depressing actuators 36a, 36b include: depressing shafts 37a, 37b having a curvature corresponding to that of the guide rails 34; 34; and actuator cylinders 38a, 38b for advancing and retracting the depressing shafts 37a, 37b in an arc pattern, so as to displace the movable support 35 along the guide rails 34, 34. The actuator cylinders 38a, 38b alternately advance and retract the depressing shafts 37a, 37b, which permits the movable support 35 to reciprocate between the support position A and the support position B.

As is the case with the first embodiment, a controller (not shown) is provided for controlling the drive motor 30 for the core wire rotating device 20, the up-down cylinders 28, 28 for the core wire up-down device 21, and the actuator cylinders 38a, 38b for the depressing shafts 37a, 37b, all of which are actuated respectively at a predetermined actuation timing. This allows the movable support 35 to displace once per up or down displacement of the annular core wire 2.

Such stranded bead wire manufacturing apparatus 11 of the second embodiment is constituted and operates in the same manner as the manufacturing apparatus 10 of the first embodiment except having the aforementioned guide rails 34, 34, movable support 35, depressing actuator 36, core wire up-down devices 21, 21, up-down rollers 27, 27, drive motor 30, rotating roller 29 and press-contact roller 39. Thus, the same components are denoted by common reference numerals and the descriptions thereof are not repeated.

A desired stranded bead wire 1 can also be manufactured by the aforementioned stranded bead wire manufacturing apparatus 11, using the same manufacturing processes as used in the first embodiment.

First, the annular core wire 2 is placed along the up-down rollers 27, 27, and the rotating roller 29 and the press-contact roller 39. The proximal end of the steel wire 3 is tentatively retained on the annular core wire 2. In synchronization with the rotation of the annular core wire 2 by the drive motor 30, the up-down cylinders 28, 28 actuate the up-down rollers 27, 27 upward to displace the passing section 7 of the annular core wire 2 up to the highest position U. Then, the actuator cylinder 38b allows the depressing shaft 37b to press the movable support 35 out of the support position B, displace along the curved guide rails 34, 34, and pass below (on one side) the passing section 7 of the annular core wire 2. The movable support 35 is stopped at the support position A by the depressing shaft 37a. Next, the up-down rollers 27, 27 are actuated downward to displace the passing section 7 of the annular core wire 2 down to the lowest position W. Then, the actuator cylinder 38a allows the depressing shaft 37a to press the movable support 35 out of the support position A to the support position B to displace along the curved guide rails 34, 34 and pass above (on the other side) the passing section 7 of the annular core wire 2.

In this manner, reciprocation of the movable support 35 along the guide rails 34, 34 permits the free rotational reel 23 to provide the pseudo linear reciprocating motion relative to the annular core wire 2. As is the case with the first embodiment, a desired stranded bead wire 1 can be manufactured by repeating the pseudo linear reciprocating motion. In such manufacturing apparatus 11 of the second embodiment, a constant distance is maintained between a position of the free rotational reel 23 and a position at which the steel wire 3 is wound onto the annular core wire 2. Therefore, the obtained stranded bead wire 1 has reduced chances of causing the steel wire 3 to loosen due to the reciprocation and is superior in integration of the annular core wire 2 and the steel wire 3.

### (Third Embodiment)

A stranded bead wire manufacturing apparatus 12 of a third embodiment according to the present invention is described hereinafter with reference to FIGs. 6 to 9.

As shown in FIGs. 6 and 7, as is the case with the manufacturing apparatus 10 of the first embodiment, the stranded bead wire manufacturing apparatus 12 includes a core wire rotating device 20 for rotating the annular core wire 2, and a free rotational reel 23 around which the steel wire 3 to be wound onto the annular core wire 2 is wound to have an outside diameter smaller than that of the annular coil wire 2. Further, the manufacturing apparatus 12 includes a reel displacement device 42 having: a core wire up-down device 21 for displacing the annular core wire 2 up and down; and linear guide rails 25, 25 for guiding reciprocation of the free rotational reel 23. The guide rails 25, 25 are provided with core inserting/removing recesses 26, 26, respectively. As is the case with the first embodiment, around the free rotational reel 23 is wound the steel wire 3 in such a manner that it is bent with a force equal to or greater than its bending yield point.

In the reel displacement device 42 of the manufacturing apparatus 12 of the present invention, the movable support 40 for supporting the free rotational reel 23 for free rotation is movable along the guide rails 25, 25. An actuating rod 40 is further provided for displacing the movable support 40 along the guide rails 25, 25. A stop 44 is pivotally supported by a spring biased hinge 43 at one edge of the movable support 40 and can be opened or released upwardly. The stop 44 engages or disengages a reception 45 that is located at an edge of the actuating rod 41 on the movable support 40 side for switching between engagement (FIG. 8(I)) and disengagement (FIG. 8(II)) of the actuating rod 41 with the movable support 40. The proximal end of the stop 44 is provided with a hook 46 for an engagement of the reception 45. When the hook 46 is engaged with the reception 45, the actuating rod 41 and the movable support 40 are brought in a state of engagement, in which the movable support 40 and the actuating rod 41 are not directly in contact with each other. Disengaging the hook 46 from the reception 45 by opening the stop 44 up forms a passing space 47 between the movable support 40 and the actuating rod 41. In such state of engagement, with the advancing and retracting motions of the actuating rod 41, reciprocation of the movable support 33 is provided along the guide rails 25, 25.

In addition, the hinge spring 43 is provided such that a biasing force is exerted in the direction in which the hook 46 of the stop 44 is engaged with the reception 45. Thus, opening the stop 44 up results in the state of disengagement, and in turn, releasing the force required to open the stop 44 results in the state of engagement in which the stop 44 engages the reception 45.

On the side opposite to the edge provided with the reception 45, the actuating rod 41 is connected to an actuator cylinder (not shown) for advancing and retracting the actuating rod 41. The actuating rod 41 is advanced and retracted by the actuator cylinder, which allows displacing the movable support 40 from a support position B that is preset outside of the annular core wire 2 to a support position A that is preset inside thereof (in the direction of approach), and from the support position A to the support position B (in the direction of distance increase) Assuming that the movable support 40 stays at the support position B, the stop 44, for engaging the movable support 40 with the actuating rod 41, is adapted to be positioned to intersect a passing section 7 of the annular core wire 2 which is displaced up and down by the core wire up-down device 21. At the support position B, upward displacement of the annular core wire 2 forces the stop 44 to open up. As a result, there is formed the passing space 47 through which the passing section 7 of the annular core wire 2 moves up.

In addition, in the manufacturing apparatus 12 of the present invention, rotating rollers 29, 29 rotated by the core wire rotating device 20 are disposed above the guide rails 25, 25. Thus, the core wire up-down device 21 displaces the passing section 7 of the annular core wire 2 down to the lowest position W within the core inserting/removing recesses 26, 26. This results in the annular core wire 2 tilting up from the passing section 7 toward the core holding section 8 between the rotating rollers 29, 29. In this case, the passing section 7 of the annular core wire 2 is positioned at the lower part of the guide rails 25, 25 (See FIG. 9(III)). This permits the movable support 40 to pass above the annular core wire 2. In contrast, upward displacement of the passing section 7 of the annular core wire 2 to the highest position U results in the annular core wire 2 tilting down from the passing section 7 toward the core holding section 8. In this case, the passing section 7 of the annular core wire 2 is positioned above the guide rails 25, 25 (See FIG. 9 (I)) . Therefore, the movable support 40 can pass below the annular core wire 2. The rotating rollers 29, 29 are provided such that the core holding section 8 of the annular core wire 2 cannot touch the actuating rod 41 which is advanced and retracted by the actuator cylinder 48.

Also, as is the case with the first embodiment, a controller (not shown) is provided for controlling the up-down cylinders 28, 28, the drive motors 30, 30, and the actuator cylinder 48, all of which are actuated respectively at a predetermined actuation timing. This allows the movable support 40 to displace once per up or down displacement of the annular core wire 2. The drive motor 30 rotates the annular core wire 2 once per seven reciprocating motions of the free rotational reel 23 by the actuator cylinder 48.

Such stranded bead wire manufacturing apparatus 11 of the third embodiment includes the actuating rod 41 for reciprocating the free rotational reel 23. The reception 45 and the stop 44 allow switching between a state of engagement and a state of disengagement between the actuating rod 41 and the movable support 40. Other than this, the manufacturing apparatus 12 is constituted to operate in the same manner as the manufacturing apparatus 10 of the first embodiment. Thus, the same components are denoted by common reference numerals and the descriptions thereof are not repeated.

Now, manufacturing processes for the stranded bead wire 1 using the stranded bead wire manufacturing apparatus 12 are described with reference to FIG. 9(I) to FIG. 9(V).

As is the case with the first embodiment, the annular core wire 2 is placed along the up-down rollers 27, 27, and the rotating rollers 29, 29. The proximal end of the steel wire 3 is tentatively retained on the annular core wire 2 without twisting the steel wire 3 along its cross section. The up-down rollers 27, 27 set the passing section 7 of the annular core wire 2 at the highest position U (See FIG. 9(I)). The movable support 40 for supporting the free rotational reel 23 stays at the support position B outside of the annular core wire 2 and is in the state of engagement with the actuating rod 41 in which the hook 46 of the stop 44 engages the reception 45.

Then, the drive motors 30, 30, the up-down cylinders 28, 28, and the actuator cylinder 48 are controlled to actuate, according to the aforementioned actuation timing. In synchronization with the rotation of the annular core wire 2 by the drive motors 30, 30, the actuator cylinder 48 advances and retracts the actuating rod 41. Such advancing and retracting motions allow the movable support 40 to pass below (on one side) the passing section 7 of the annular core wire 2 and to move to the support position A inside of the annular core wire 2 as shown in FIG. 9 (I) to FIG. 9(II).

Then, as shown in FIG. 9(II) to FIG. 9 (III), the up-down cylinders 28, 28 displace the up-down rollers 27, 27 down to the lowest position W with the annular core wire 2 placed within the core inserting/removing recesses 26, 26 on the guide rails 25,25. This permits the free rotational reel 23 to pass through inside of the annular core wire 2. Subsequently, as shown in FIG. 9(III) to FIG. 9(IV), the actuator cylinder 48 retracts the actuating rod 41, which allows the movable support 33 to pass above (on the other side) the passing section 7 of the annular core wire 2 and to move the support position B.

Subsequently, as shown in FIG. 9(IV) to FIG. 9(V), the up-down cylinders 28, 28 actuate the up-down rollers 27, 27 upward, which forces the passing section 7 of the annular core wire 2 to open the stop 44 up, for engaging with the reception 45 of the actuating rod 41. This results in the state of disengagement between the actuating rod 41 and the movable support 40. Then, the passing section 7 of the annular core wire 2 moves through the passing space 47 formed between the actuating rod 41 and the movable support 40 up to the highest position U as shown in FIG. 9(I). When the annular core wire 2 passes through the passing space 47, the stop 44 engages the reception 37 again due to a biasing force of the spring biased hinge 43. This results in the state of engagement between the actuating rod 41 and the movable support 33. Then, as described above, the actuator cylinder 48 advances and retracts the actuating rod 41, thereby displacing the movable support 40 to the support position A.

The annular core wire 2 is rotated eight times. For every rotation, the aforementioned pseudo linear reciprocating motion, in which the free rotational reel 23 is displaced below the rotating annular core wire 2 from the outside to inside thereof and displaced above it from the inside to outside, is repeated seven times. Then, each device is stopped and the proximal and distal ends of the steel wire 3 are connected using a joint ring or the like, thereby obtaining a desired stranded bead wire 1. As is the case with the first embodiment, the manufacturing apparatus 12 can also prevent the free rotational axis of the free rotational reel 23 from being inclined. This allows the steel wire 3 to be tightly wound onto the annular core wire 2 in a spiral pattern without twisting the steel wire 3 along its cross section.

### (Fourth Embodiment)

A stranded bead wire manufacturing apparatus 13 of a fourth embodiment according to the present invention is described hereinafter with reference to FIG. 10 to FIGs. 12(I)-12(IV).

As shown in FIGs. 10 and 11, the stranded bead wire manufacturing apparatus 13 includes: a seesaw device 52 for making guide rails 50, 50 seesaw about a pivotal point P; and a core wire rotating device 56 for supporting an annular core wire 2 horizontally and rotating it in the circumferential direction. The guide rails 50, 50 are designed to guide a movable support 49 for supporting a free rotational reel 23 for free rotation.

Core support seats 57, 57 are disposed on both sides of the tilt motion range of the guide rails 50, 50 tilted by the seesaw device 52. On one of the core support seats 57, an hourglass-shaped support roller 58 for rotatably supporting the annular core wire 2 and an hourglass-shaped rotating roller 29 rotated by a drive motor 30 are disposed. Also, on the other core support seat 57, support rollers 58 and 58 are disposed at positions respectively facing the aforementioned support roller 58 and rotating roller 29. These three support rollers 58 and one rotating roller 29 allow the annular core wire 2 to be disposed in the horizontal direction and rotate in the circumferential direction. All those rollers and the support seats make up the core wire rotating device 56.

In the seesaw device 52, the two linear guide rails 50, 50 approximately parallel to each other are supported by a pair of columns 51 for tilt motion about a pivotal point P that is at approximately a center in the longitudinal direction of the guide rails. The pivotal point P is located outside of the annular core wire 2 placed on the core wire rotating device 56. The ends of the guide rails 50, 50 on one side tilt above and below (on one side and the other) and inside the annular core wire 2. The height of the columns 51 is so preset that the pivotal point P is positioned lower than the annular core wire 2. In other words, the horizontally arranged guide rails 50, 50 are below a plane of the annular core wire 2 for rotation.

An action rod 53 is coupled to the guide rails 50, 50 at a point offset outward from the annular core wire 2. The action rod 53 is connected to an up-down cylinder 54 and displaced up and down by the actuation of the up-down cylinder 54. Displacing the action rod 53 up and down allows the guide rails 50, 50 to tilt about the pivotal point P inward and outward of the annular core wire 2 (See FIGs. 12(I) to 12(IV)). In other words, the coupling point of the action rod 53 is defined as a point of action Q. A tilt angle of the guide rails 50, 50 tilted by the action rod 53 is predetermined to the extent at which a movable support 49 can slide down by the self-weight.

The guide rails 50, 50 are formed with core inserting/removing recesses 26, 26 for inserting the annular core wire 2 at the points of intersection of the guide rails 50, 50 and the annular core wire 2 when the guide rails 50, 50 are tilted down outward from the inside of the annular core wire 2 by displacing the action rod 53 down. An arc portion of the annular core wire 2 between the points of intersection of the guide rails 50, 50 is defined as a passing section 7. The movable support 49 passes above or below the passing section 7.

Further, at both ends of the guide rails 50, 50 are provided inner retaining portions 59, 59 and outer retaining portions 60, 60, respectively, for stopping the movable support 49 which is movable along the guide rails 50, 50. A position inside of the annular core wire 2, where the movable support 40 is stopped by the inner retaining portions 59, 59, is assumed to be a stop point C, while the outside position, where it is stopped by the outer retaining portions 60, 60, is assumed to be a stop point D. As described above, the length of the guide rails 50, 50 is so preset that their ends on one side can move up and down, passing through inside the annular core wire 2 by the tilt motion of the guide rails 50, 50.

In such seesaw device 52, when the up-down cylinder 54 displaces the action rod 53 down, the guide rails 50, 50 are tilted down outward of the annular core wire 2, so that the passing section 7 of the annular core wire 2 comes into the core inserting/removing recesses 26, 26. Then, the movable support 49 staying at the stop position C slides down by its self-weight to the other side of the annular core wire 2 along the guide rails 50, 50, and passes above the passing section 7 of the annular core wire 2. In contrast, upward displacement of the action rod 53 allows the guide rails 50, 50 to tilt down inward of the annular core wire 2. At this time, the guide rails 50, 50 move across the annular core wire 2 below the passing section 7 thereof. Then, the movable support 49 staying at the stop position D passes below the passing section 7 of the annular core wire 2 along the guide rails 50, 50. Displacing the action rod 53 up and down in this manner allows the guide rails 50, 50 to tilt while allowing the movable support 49 to pass above and below the passing section 7 of the annular core wire 2 as well as to pass through inside of the annular core wire 2. This results in the pseudo linear reciprocating motion of the free rotational reel 23. In the fourth embodiment, a surface, where the movable support 49 slides due to tilt motions of the guide rails 50, 50, is defined as a tilting plane of the present invention.

A controller (not shown) is also provided for controlling the up-down cylinder 54 and the drive motor 30, all of which are actuated respectively at a predetermined actuation timing. The up-down cylinder 54 is actuated alternately upward and downward in a time interval required for the movable support 40 to move between the stop positions C and D on the tilting guide rails 50, 50. In addition, the drive motor 30 rotates the annular core wire 2 once per seven upward-downward actuations of the up-down cylinder 54.

The stranded bead wire manufacturing apparatus 13 of the fourth embodiment is provided with the seesaw device 52, in place of the reel displacement device of the first embodiment, to repeat the pseudo linear reciprocating motion. Therefore, the fourth embodiment is constituted to operate in the same manner as the first embodiment except using the seesaw device 52. Thus, descriptions of the same reference numerals of common components are not repeated.

Now, manufacturing processes for the stranded bead wire 1 using the stranded bead wire manufacturing apparatus 13 are described with reference to FIGs. 12(I) to 12(IV).

First of all, the guide rails 50, 50 are horizontally arranged by actuating the action rod 53. Then, the free rotational reel 23, around which the steel wire 3 is wound in such a manner that it is bent with a force equal to or greater than its bending yield point, is placed on the movable support 49 staying at the stop position D on the guide rails 50, 50. On the other hand, the annular core wire 2 is placed along the rotating roller 29 of the core wire rotating device 56 and the three support rollers 58. The proximal end of the steel wire 3 is tentatively retained on the annular core wire 2 without twisting the steel wire 3 along its cross section.

Then, the drive motor 30 and the up-down cylinder 54 are controlled to actuate, according to the aforementioned actuation timing. In synchronization with the rotation of the annular core wire 2 by the core wire rotating device 56, the up-down cylinder 54 displaces the action rod 53 up to tilt the guide rails 50, 50 down inward of the annular core wire 2, as shown inFIG. 12(I). Therefore, as shown in FIG. 12(I) to FIG. 12(II), the movable support 49 staying at the stop position D slides down along the guide rails 50, 50 and passes below (on one side) the annular core wire 2. Then, it is stopped at the stop position C by the inner retaining portions 59, 59.

Subsequently, as shown in FIG. 12(II) to FIG. 12(III), the up-down cylinder 54 displaces the action rod 53 down to tilt the guide rails 50, 50 down outward of the annular core wire 2 so that the annular core wire 2 comes into the core inserting/removing recesses 26, 26 on the guide rails 50, 50. This permits the free rotational reel 23 to pass through inside of the annular core wire 2. Then, as shown in FIG. 12(III) toFIG. 12(IV), the movable support 49 staying at the stop position C slides down along the guide rails 50, 50 and passes above (on the other side) the annular core wire 2. It is then stopped at the stop position D by the outer retaining portions 60, 60. After that, tilting the guide rails 50, 50 inward of the annular core wire 2 allows the movable support 49 to move from below the annular core wire 2 to above.

The annular core wire 2 is rotated eight times. For every rotation, the a forementioned pseudo linear reciprocating motion, in which the free rotational reel 23 is displaced below and inward from the outside relative to the rotating annular core wire 2, to pass through inside thereof, and then displaced above and outward from the inside, is repeated seven times. Then, each device is stopped and the proximal and distal ends of the steel wire 3 are connected using a joint ring or the like, thereby obtaining a desired stranded bead wire 1. The manufacturing apparatus 13, having the seesaw device 52 for providing the pseudo linear reciprocating motion, can prevent the free rotational axis of the free rotational reel 23 from being inclined relative to the rotation axis of the annular core wire 2. This allows the steel wire 3 to be tightly wound onto the annular core wire 2 in a spiral pattern without twisting the steel wire 3 along its cross section. Thus, the manufacturing apparatus 13 of the present invention can also manufacture a stranded bead wire 1, which is the same as manufactured by the manufacturing apparatus 10 of the first embodiment, with little winding force required, as is the case with the first embodiment. Also, in the manufacturing apparatus 13 of the fourth embodiment, since the guide rails 50, 50 are tilted by the seesaw device 52 to displace the movable support 49, various devices tobe controlled can be advantageously simplified compared to those of the aforementioned manufacturing apparatuses 10 to 13 and a manufacturing apparatus 15, which will be described hereinafter.

### (Fifth Embodiment)

A stranded bead wire manufacturing apparatus 14 of the fifth embodiment according to the present invention is described with reference to FIGs. 13 to FIGs. 16(I)-(III).

As shown in FIGs . 13 and 14 , the stranded bead wire manufacturing apparatus 14 includes: a core wire rotating device 70 for supporting an annular core wire 2 and rotating it in the circumferential direction; a core wire displacement device 71 for supporting the annular core wire 2 vertically to permit the annular core wire 2 to reciprocate in the horizontal direction along a plane f crossing the annular core wire 2; a shift support 67 having magnetic elements 66 and 66 respectively on its support surfaces 65 and 65 for supporting a rotational shaft of the free rotational reel 23 on its both sides; and a reel shift device 72 for shifting the position of the shift support 67 between both sides of the plane f crossing the annular core wire 2.

The core wire displacement device 71 has a core wire displacement seat 73 provided with three hourglass-shaped support rollers 58 for supporting the annular core wire 2 rotatably in the circumferential direction. The core wire displacement device 71 further has: a core wire guide rail 74 for supporting the bottom side of the core wire displacement seat 73 and guiding reciprocation of the core wire displacement seat 73 in the horizontal direction along a rotational plane of the annular core wire 2; and an actuator cylinder 75 for advancing and retracting the core wire displacement seat 73 along the guide rail 74. The core wire displacement seat 73 has generally a U-shape configuration in which an inner area of the core wire displacement seat 73, in which the annular core wire 2 is placed, is continuously open to the central area on the advance side. The actuator cylinder 75 is connected to the side edge of the core wire displacement seat 73 toward the retracting direction. A core wire support surface 78 is formed on one side of the core wire displacement seat 73, and provided with the three support rollers 58. The annular core wire 2 is vertically placed on and along the core wire support surface 78.

On the core wire support surface 78 of the core wire displacement seat 73, a rotating roller 29 for supporting the annular core wire 2 and rotating it in the circumferential direction is disposed. The rotating roller 29 is coupled to a drive motor 30. The rotating roller 29 and the aforementioned three support rollers 58 are so disposed on the core wire support surface 78 as to individually support the annular core wire 2.

A magnet support column 76 is disposed on the core wire support surface 78 side of the core wire displacement seat 73. On the magnet support column 76, an electromagnet 68 is fixed at a height for allowing the shift support 67 to pass through inside of the annular core wire 2 placed on the core wire displacement seat 73 along the rotational axis. The magnet support column 76, on which the electromagnet 68 is disposed, refers to a magnet support according to the present invention.

On the other side of the core wire support surface 78, a magnetic displacement unit 80, on which an electromagnet 69 is disposed so as to face the electromagnet 68 on the magnet support column 76, is provided. The magnetic displacement unit 80 has a displaceable shaft 79 with the electromagnet 69 disposed at the proximal end toward the advancing direction, and a shift cylinder 77 for advancing and retracting the displaceable shaft 79. The shift cylinder 77 actuates the displaceable shaft 79 to be advanced and retracted along the rotational axis of the annular core wire 2, thereby advancing and retracting the electromagnet 69 between both sides of the plane f crossing the annular core wire 2.

The electromagnets 68, 69 are of coil type, in which the coils are energized or turned on to exert a magnetic force, and in turn denergized or turned off to exert no magnetic force.

The magnet support column 76, the electromagnet 68 and the magnetic displacement unit 80 make up the reel shift device 72.

In such reel shift device 72, the magnetic element 66 on one side of the shift support 67 is attracted by the electromagnet 68 on the magnet support column 76 in the turn-on state to fix the shift support 67 in a support position E on the core wire support surface 78 side. The shift cylinder 77 advances the displaceable shaft 79 from the other side of the core wire support surface 78, thereby displacing the electromagnet 69 on the displaceable shaft 79 to a transfer point G to contact the magnetic element 66 on the other side of the shift support 67. Then, in synchronization with turning-on the electromagnet 69 on the displaceable shaft 79, the electromagnet 68 on the magnet support column 76 is turned off, causing the electromagnet 69 on the displaceable shaft 79 to attract the magnetic element 66. And, the shift support 67 is held on the displaceable shaft 79. Subsequently, the shift cylinder 77 retracts the displaceable shaft 79 and displaces the shift support 67 to a support position F on the other side of the core wire support surface 78. Again, advancing the displaceable shaft 79, which holds the shift support 67, to move to the transfer position G allows the shift support 67 to be transferred to a position to contact the electromagnet 68 on the magnet support column 76. Then, the electromagnet 69 on the displaceable shaft 79 is turned off in synchronization with turning on the electromagnet 68 on the magnet support column 76. This allows the shift support 67 to move from the support position F to the support position E. In this manner, the shift support 67 is transferred alternately between the electromagnet 68 on the magnet support column 76 and the electromagnet 69 on the displaceable shaft 79. This results in shifting the position of the free rotational reel 23 between both sides of the annular core wire 2, that is, from one side to the other along its rotational axis.

The core wire displacement device 71 reciprocates the core wire displacement seat 73 along the core wire guide rail 74, such that the shift support 67 is transferred alternately between the electromagnet 68 on the magnet support column 76 and the electromagnet 69 on the magnetic displacement unit 80, inward and outward of the annular core wire 2 as described above. In other words, the core wire displacement device 71 actuates the actuator cylinder 75 to allow the annular core wire 2 to reciprocate between a shift position J through which the shift support 67 is shifted, and a shift position K out of which it is shifted.

A controller (not shown) is also provided for controlling the shift cylinder 77, the drive motor 30 and the actuator cylinder 75, all of which are actuated respectively at a predetermined actuation timing. Thus, the shift cylinder 77 advances and retracts the displaceable shaft 79 once per back or forth motion of the annular core wire 2 actuated by the actuator cylinder 75. Further, the respective on/off states of the electromagnet 68 on the magnet support column 76 and the electromagnet 69 on the magnetic displacement unit 80 are switched to each other every time the displaceable shaft 79 is advanced. The drive motor 30 rotates the annular core wire 2 once per seven reciprocating motions of the annular core wire 2 by the actuator cylinder 75, as is the case with the first embodiment.

Now, manufacturing processes of the stranded bead wire 1 using the stranded bead wire manufacturing device 14 are described with reference to FIGs. 15(I)-15(III) to FIGs. 16(I) -16(III), which are plan views of the manufacturing apparatus 14.

First, the electromagnet 68 on the magnet support column 76 is turned on to attract the magnetic element 66 (See FIG. 13) on one side of the shift support 67 to the electromagnet 68, thereby placing the shift support 67 in the support position E. Also, the annular core wire 2 is placed in the core wire displacement seat 73 or the shift position K. Then, the proximal end of the steel wire 3 is tentatively retained on the annular core wire 2 without twisting the steel wire 3 along its cross section. The electromagnet 69 on the displaceable shaft 79 remains to be turned off.

Then, the drive motor 30, the actuator cylinder 75 and the shift cylinder 77 are controlled to actuate, according to the aforementioned actuation timing. In synchronization with the rotation of the annular core wire 2 by the core wire rotating device 56, the actuator cylinder 75 allows the core wire displacement device 73 to move forth and displace the annular core wire 2 from the shift position K to the shift position J along the core wire guide rail 74, as shown in FIG. 15(I) to FIG. 15(II). This results in a displacement of the free rotational reel 23 on the core wire support surface 78 side of the annular core wire 2 (in the direction of approach). Subsequently, as shown in FIG. 15(II) to FIG. 15(III), the shift cylinder 77 advances the displaceable shaft 79, which displaces the electromagnet 69 on the displaceable shaft 79 to the transfer point G along the rotational axis of the annular core wire 2 so as to contact the magnetic element 66 (See FIG. 13) on the shift support 67. Under such conditions, the displaceable shaft 79 is protruding through the plane f crossing the annular core wire 2. Then, in synchronization with turning-off the electromagnet 68 on the magnet support column 76, the electromagnet 69 on the displaceable shaft 79 is turned on, thereby holding the shift support 67 on the displaceable shaft 79. Subsequently, as shown in FIG. 15(III) to FIG. 16(I), the shift cylinder 77 retracts the displaceable shaft 79 from the transfer point G and displaces the shift support 67 to the support position F. This allows the position of the free rotational reel 23 to be shifted from the support position E on the core wire support surface 78 side to the support position F on the other side through the inside of the annular core wire 2. In other words, the free rotational reel 23 passed through inside of the annular core wire 2.

Subsequently, as shown in FIG. 16(I) to FIG. 16(II), the actuator cylinder 75 allows the core wire displacement seat 73 to move back and displace the annular core wire 2 from the shift position J to the shift position K. This results in a displacement of the free rotational reel 23 on the other side of the core wire support surface 78 of the annular core wire 2 (in the direction of distance increase). As shown in FIG. 16(II) to FIG. 16(III), the displaceable shaft 79 for holding the shift support 67 is advanced from the other side of the core wire support surface 78 side to the transfer position G on the outside of the annular core wire 2. Then, in synchronization with turning off the electromagnet 69 on the displaceable shaft 79, the electromagnet 68 on the magnet support column 76 is turned on, thereby transferring the shift support 67 from the displaceable shaft 79 to the magnet support column 76. Subsequently, the displaceable shaft 79 is retracted (See FIG. 15(I)).

The pseudo linear reciprocating motion is repeated, in which the free rotational reel 23 is displaced inward from the outside on the core wire support surface 78 side of the annular core wire 2 relative to the rotating annular core wire 2, to pass through inside thereof, and then displaced outward from the inside on the other side of the core wire support surface 78 side, as described above. Then, the annular core wire 2 is rotated eight times. For every rotation, the pseudo linear reciprocating motion is repeated seven times. The proximal and distal ends of the steel wire 3 are connected using a joint ring or the like, thereby obtaining a desired stranded bead wire 1. The manufacturing apparatus 14 permits the free rotational reel 23 to reciprocate parallel to the rotational plane of the annular core wire 2 and also prevents the free rotational axis of the free rotational reel 23 frombeing inclined relative to the rotational axis. This allows the steel wire 3 to be tightly wound onto the annular core wire 2 in a spiral pattern without twisting the steel wire 3 along its cross section. Thus, the manufacturing apparatus 14 of the present invention can also manufacture a stranded bead wire with little winding force required, as is the case with the first embodiment. Therefore, a stranded bead wire 1 can be manufactured, which is the same as manufactured by the manufacturing apparatus 10 of the first embodiment.

As described above, in the stranded bead wire manufacturing apparatuses 10 to 14 shown in the first to fifth embodiments, a plane displacement of the free rotational reel 23 around which the pre-bent steel wire 3 is wound allows the steel wire 3 to be tightly wound onto the annular core wire 2 in a spiral pattern without twisting the steel wire 3 along its cross section. Since there occurs no repulsive force on the windings of the steel wire 3, the steel wire can be wound along the annular core wire 2 such that they are integral with each other in so-called a natural state. A desired stranded bead wire 1 can therefore be provided easily and appropriately. The stranded bead wire 1 manufactured in this manner is embedded into a tire used for cars, which improves the force for the tire to tightly joint a wheel, and provides excellent driving stability as well as a high strength and durability. As described above, conventionally, there has been a problem in which winding the steel wire 3 was too difficult to manufacture such a stranded bead wire that can provide desired performance. This problem can be thus solved by the present invention.

The aforementioned first to fifth embodiments are constituted with the free rotational reel 23, around which the steel wire 3 is wound, disposed for free rotation to wind up the steel wire 3 around the rotating annular core wire 2. Not only this, also another constitution may be used in which the free rotational reel 23 is biased in a direction opposite to the rotation direction in which the steel wire 3 is tightly wound onto the annular core wire 2, exerting a tension on the steel wire 3. For example, in the first embodiment, an electromagnet is disposed on the upper surface of the movable support 24 so that the electromagnet exerts a resistance force against the rotation of the free rotational reel 23. Exerting a tension in this manner allows the steel wire 3 to be constantly wound onto the annular core wire 2. Therefore, the obtained stranded bead wire is superior in integration of the annular core wire 2 and the steel wire 3.

In contrast, the manufacturing apparatus 11 of the second embodiment is constituted with the arcuate guide rails 34, 34 in place of the guide rails 25, 25 of the first embodiment. Likewise, the guide rails 25, 25 of the third embodiment and the guide rails 50, 50 of the fourth embodiment may also be replaced with the arcuate guide rails. In addition, the core wire guide rail 74 of the fifth embodiment may be formed into an upward curved shape.

For example, in the manufacturing apparatus 11 of the third embodiment, as shown in FIG. 17, the arcuate guide rails 34, 34 of the second embodiment are disposed. In the stranded bead wire manufacturing apparatus 15 of such embodiment, advancing and retracting the actuating rod 41 permits the movable support 40 for supporting the free rotational reel 23 for free rotation to reciprocate between the support position A and the support position B along the guide rails 34, 34. Then, the up-down rollers 27, 27 are displaced up or down once per advancing-retracting motion of the actuating rod 41, to repeat the pseudo linear reciprocating motion, in which the free rotational reel 23 reciprocates above and below the annular core wire 2. A desired stranded bead wire 1, which is the same as in the third embodiment, can therefore be manufactured. Further, as with the case in the second embodiment, when the free rotational reel 23 is reciprocating, almost a constant length of the steel wire 3 is wound off the free rotational reel 23 and tightly wound onto the annular core wire 2. This reduces chances of causing the steel wire 3 to loosen and is superior in integration of the annular core wire 2 and the steel wire 3.

In addition, the manufacturing apparatus 14 of the fifth embodiment is constituted with the annular core wire 2 adapted to rotate in the circumferential direction in generally a vertical arrangement. As an alternative configuration, the annular core wire 2 may be adapted to rotate in the circumferential direction in generally a horizontal arrangement, as is the case with the manufacturing apparatuses 10 to 13 of the first to fourth embodiments. In such case, the reel shift device 72 permits the position of the free rotational reel 23 to be shifted generally in the up-down direction. Likewise, the manufacturing apparatuses 10 to 13 of the first to fourth embodiments may also use the constitution in which the annular core wire 2 is adapted to rotate in the circumferential direction in generally a vertical arrangement. The rotational plane of the annular core wire 2 may be arranged to incline, depending on the installation environment.

In contrast, the aforementioned fifth embodiment may be constituted in which the core wire displacement seat 73 for supporting the annular core wire 2 is in a fixed position, while the magnet support column 76 and the magnetic displacement unit are displaced in synchronization with each other along the plane f crossing the annular core wire 2 inward and outward thereof. In this constitution, relative to the annular core wire 2 which rotates in the circumferential direction about a fixedposition, the free rotational reel 23 is displaced inward from the outside on one side of the plane f crossing the annular core wire 2, and then displaced outward from the inside on the other side. For every displacement, the position of the free rotational reel 23 is shifted from one side of the annular core wire 2 to the other. Displacements of the magnet support column 76 and the magnetic displacement unit 80 can be achieved by providing a guide rail, actuator cylinder and the like. Using the above constitution, a desired stranded bead wire 1 can also be manufactured, as is the case with the fifth embodiment.

Also, the aforementioned fifth embodiment is constituted with the reel shift device 72 in which the electromagnets and the magnetic elements allow the free rotational reel 23 to be shifted between both sides of the annular core wire 2. A sucker or vacuum chuck may also be used other than these electromagnets and magnetic elements.

In addition to the core wire up-down device 21, the reel displacement devices 22, 42, the seesaw device 52, the core wire displacement device 71, and the reel shift device 72, the first to fifth embodiments also use a hydraulic or pneumatic cylinder as a drive unit. However, in place of this cylinder, a cam, crank, stepping motor or the like may also be used as the drive unit.

In the first to fifth embodiments, the steel wire 3 is first tentatively retained on the annular core wire 2. However, two or three turns of the steel wire 3 may be wound without twisting along the cross section before starting controllable operations of each manufacturing device. Further, instead of connecting the proximal and distal ends of the steel wire 3 using a joint ring, these ends may be fixed around the bead wire. A device for tentatively retaining the steel wire 3 or a device for connecting the proximal and distal ends together may be additionally provided for further improvement of work efficiency.

Although it is described that the same form of stranded bead wires 1 are manufactured in the first to fifth embodiments, another form of bead wire may also be manufactured. More specifically, the annular core wire 2 having a different annular diameter or wire diameter, or the steel wire 3 having a different diameter may be used. Also, the number of turns of the steel wire 3 for each circumferential rotation of the annular core wire 2, and the number of rotations of the annular core wire 2, in which each turn of the steel wire 3 comes into close contact and alignment with the last turn, may be varied. The steel wire 3 may also be wound so as to form plural layers thereof. Such forms of the bead wire may be chosen according to the application.

It should be apparent that the present invention is not limited to the aforementioned embodiments, and thus various changes and modifications could be made without departing from the scope of the present invention. Although the embodiments show the manufacturing apparatuses for manufacturing the stranded bead wire 1 to be embedded into a tire used for cars, they may also manufacture stranded bead wires used for motorcycle or aircraft tires without changing the constitution.

In addition, even in use of a CFRP wire made of carbon fiber bonded with matrix resin or a CFRM wire of reinforced metal materials with such carbon fiber, in place of the steel wire 3 of the present invention, the manufacturing methods and manufacturing apparatuses of the present invention can also provide a desired stranded bead wire 1 appropriately and easily. Further, Kevlar fiber may also be used other than such carbon fiber.

### Industrial Applicability

A method for manufacturing a stranded bead wire according to the present invention comprises: rotating an annular core wire in the circumferential direction thereof, while repeating a pseudo linear reciprocating motion of a reel around which a steel wire is wound to have an outside diameter smaller than that of the annular core wire, in which motion the reel is displaced approximately in a radial direction of the annular core wire in a way that it is relatively displaced in an approach direction on one side of a plane crossing the annular core wire, then passed through inside thereof, and displaced in a direction of distance increase on the other side of the plane, whereby the steel wire is tightly wound onto the annular core wire in a spiral pattern in the circumferential direction of the annular core wire.

A stranded bead wire manufacturing apparatus according to the manufacturing method comprises: a core wire rotating means for rotating the annular core wire; a free rotational reel around which the steel wire is wound to have an outside diameter smaller than that of the annular core wire; and a reciprocable displacement means for repeating the pseudo linear reciprocating motion, wherein while the annular core wire is rotated, the free rotational reel repeats the pseudo linear reciprocating motion, whereby the steel wire is tightly wound onto the annular core wire in a spiral pattern in a circumferential direction of the annular core wire.

The following effects can be obtained by the manufacturing method and apparatus constituted as described above.
a Turning the pre-bent steel wire around the annular core wire being rotating in the circumferential direction allows the steel wire to be tightly wound along and onto the annular core wire without twisting the steel wire along its cross section. Thus, the manufacturing method and apparatus of the present invention can appropriately and easily provide a stranded bead wire which allows the steel wire to be tightly wound onto the annular core wire, providing an integral form without breakdown of the steel wire.
b The stranded bead wire manufactured by the manufacturing method and apparatus of the present invention can provide a high strength and durability, a sufficient force for a tire to tightly joint a wheel, and excellent driving stability.
c The manufacturing apparatus comprises either a core wire up-down device and reel displacement device, or a seesaw device, or a reel shift device and core wire displacement device, or a reel shift device and reel displacement device, as a reciprocable displacement means. The pseudo linear reciprocating motion according to the present invention is therefore provided appropriately and smoothly.

## Claims

1. A method of manufacturing a stranded bead wire, comprising:
rotating an annular core wire in a circumferential direction thereof, while repeating a pseudo linear reciprocating motion of a reel around which a steel wire is wound to have an outside diameter smaller than that of the annular core wire, in which motion the reel is displaced approximately in a radial direction of the annular core wire in a way that it is relatively displaced in an approach direction on one side of a plane crossing the annular core wire, then passed through inside thereof, and displaced in a direction of distance increase on the other side of the plane,
whereby the steel wire is tightly wound onto the annular core wire in a spiral pattern in the circumferential direction of the annular core wire.

2. A stranded bead wire manufacturing apparatus comprising:
a core wire rotating means for rotating an annular core wire in the circumferential direction;
a free rotational reel around which a steel wire to be wound onto the annular core wire is wound to have an outside diameter smaller than that of the annular core wire; and
a reciprocable displacement means for repeating the pseudo linear reciprocating motion of the free rotational reel in which motion the reel is displaced approximately in the radial direction of the annular core wire in a way that it is relatively displaced in an approach direction on one side of a plane crossing the annular core wire, then passed through inside thereof, and displaced in a direction of distance increase on the other side of the plane,
wherein, while the annular core wire is rotated by the core wire rotating means, the free rotational reel repeats the pseudo linear reciprocating motion relative to the annular core wire via the reciprocable displacing means, whereby the steel wire is tightly wound onto the annular core wire in a spiral pattern in a circumferential direction of the annular core wire.

3. The stranded bead wire manufacturing apparatus as claimed in Claim 2, wherein
the reciprocable displacement means includes: a core wire up-down device for supporting the annular core wire and displacing it up and down along the rotational axis; and a reel displacement device for supporting the free rotational reel for free rotation and permitting it to reciprocate in the inward and outward directions of the annular core wire approximately in the radial direction thereof, and
the pseudo linear reciprocating motion is repeated according to the actuation timing at which the reel displacement device displaces the free rotational reel once per up or down displacement of the annular core wire by the core wire up-down device.

4. The stranded bead wire manufacturing apparatus as claimed in Claim 3, wherein
the reel displacement device includes a guide rail arranged in association with the inside and the outside of the annular core wire approximately in the radial direction thereof for guiding reciprocating motion of the free rotational reel, and
a core inserting/removing recess for inserting the annular core wire displaced down by the core wire up-down device is formed in the guide rail at a point of intersection of the annular core wire such that the recess crosses the guide rail relative to its longitudinal direction.

5. The stranded bead wire manufacturing apparatus as claimed in Claim 4, wherein
the reel displacement device includes: a movable support for supporting the free rotational reel for free rotation and permitting it to reciprocate along the guide rail; and depressing actuators facing each other along the guide rail for advancing and retract ing in the inward and outward directions of the annular core wire, and
an advancing-retracting motion, in which the movable support is continuously advanced and retracted in opposite directions along the guide rail, is repeated by the depressing actuators, thereby providing reciprocation motion of the free rotational reel.

6. The stranded bead wire manufacturing apparatus as claimed in Claim 4, wherein
the reel displacement device includes: a movable support for supporting the free rotational reel for free rotation and permitting it to reciprocate along the guide rail; and an action rod that is switched to either a state of engagement or a state of disengagement with the movable support and permitting the movable support to reciprocate along the guide reel in the state of engagement, and
the action rod is alternately switched between the state of engagement, in which the action rod permits the movable support to reciprocate, and the state of disengagement, in which a passing space for displacing the annular core wire up or down is formed between the action rod and the movable support.

7. The stranded bead wire manufacturing apparatus as claimed in Claim 6, wherein
the reel displacement device includes: a stop that is connected to one of the movable support and the action rod by a spring biased hinge; and a reception that is disposed in the other and engageable with the stop,
the stop engages the reception by a biasing force of the spring biased hinge to make the state of engagement, and
the annular core wire displaced up or down by the core wire up-down device forces the stop to be open against the biasing force of the spring biased hinge to make the state of disengagement.

8. The stranded bead wire manufacturing apparatus as claimed in Claim 2, wherein
the reciprocable displacement means includes a seesaw device for tilting a tilting plane inward and outward of the annular core wire, the tilting plane being arranged in association with the inside and outside of the annular core wire approximately in the radial direction thereof,
the seesaw device includes: a movable support for supporting the free rotational reel for free rotation; a guide rail being arranged in association with the inside and the outside of the annular core wire in a tilt motion direction on the tilting plane for guiding reciprocation of the movable support; and a core inserting/removing recess being formed at a point of intersection of the annular core wire such that the recess crosses the guide rail relative to its longitudinal direction, and
the pseudo linear reciprocating motion is repeated, in which the guide rail is tilted to one side such that the annular core wire comes into the core inserting/removing recess to displace the movable support above the annular core wire, and then tilted to the other side to displace the movable support below the annular core wire.

9. The stranded bead wire manufacturing apparatus as claimed in Claim 8, wherein
the seesaw device further includes: a support column for tiltably supporting the tilting plane; and an action rod being rotatably coupled at a point of action offset in the radial direction from a pivotal point supported by the support column, and displacing the point of action up and down by the action rod allows the tilting plane to tilt about the pivotal point on both sides.

10. The manufacturing apparatus of the stranded bead wire as claimed in any one of Claims 4 to 9, wherein
the guide rail is formed in an arc shape whose arc center is approximately at the point where the steel wire is being wound tightly onto the annular core wire.

11. The stranded bead wire manufacturing apparatus as claimed in Claim 2, wherein
the reciprocable displacement means includes: a reel shift device for shifting the position of the free rotational reel to both sides of the plane crossing the annular core wire; and a core wire displacement device for supporting the annular core wire and permitting it to reciprocate approximately in the radial direction such that the free rotational reel is displaced inward and outward of the annular core wire, and
the pseudo linear reciprocating motion is repeated according to the timing at which the annular core wire is displaced, by the core wire displacement device, once per position shift of the free rotational reel by the reel shift device.

12. The stranded bead wire manufacturing apparatus as claimed in Claim 2, wherein
the reciprocable displacement means includes: a reel shift device for shifting the position of the free rotational reel to both sides of the plane crossing the annular core wire; and a reel displacement device for permitting the free rotational reel whose position is shifted by the reel shift device to reciprocate inward and outward of the annular core wire approximately in the radial direction thereof, and
the pseudo linear reciprocating motion is repeated according to the timing at which the free rotational reel is displaced by the reel displacement device once per position shift of the free rotational reel by the reel shift device.

13. The stranded bead wire manufacturing apparatus as claimed in Claim 11 or 12, wherein
the reel shift device includes: a shift support for supporting the free rotational reel for free rotation on both sides of its free rotational shaft, which has a magnet element on each side of the free rotational reel,
the reel shift device further includes: a magnet support having electromagnets, which are turned on/off, facing each other, and being provided on one side of the plane crossing the annular core wire; and a magnetic displacement unit being provided on the other side for advancing and retracting the electromagnets along the rotational axis of the annular core wire, and
the electromagnets on the magnetic displacement unit and on the magnet support are alternately turned on once per advancing motion of the magnetic displacement unit to the one side from the other, thereby transferring the shift support between the electromagnets to shift the position of the free rotational reel between both sides of the plane crossing the annular core wire.
